# EUROPÄISCHE PATENTSCHRIFT

(11) **EP 2 454 306 B1**
(45) Veröffentlichungstag und Bekanntmachung des Hinweises auf die Patenterteilung: **20.11.2013**
(21) Anmeldenummer: 10713825.7
(22) Anmeldetag: 27.03.2010
(51) Int. Cl.: C08F 299/02, C08G 18/81, C09D 175/16, C08F 290/06, C08J 7/04

(54) **KRATZFESTBESCHICHTETE POLYCARBONATE MIT HOHER TRANSPARENZ, VERFAHREN ZU DEREN HERSTELLUNG UND DEREN VERWENDUNG**
POLYCARBONATES HAVING A SCRATCH-RESISTANT COATING AND HAVING HIGH TRANSPARENCY, METHOD FOR THE PRODUCTION THEREOF, AND USE THEREOF
POLYCARBONATES HAUTE TRANSPARENCE MUNIS D UN REVÊTEMENT RÉSISTANT À L ABRASION, PROCÉDÉ DE FABRICATION ET UTILISATION ASSOCIÉS

(30) Priorität: 14.07.2009 DE 102009032921
(43) Veröffentlichungstag der Anmeldung: 23.05.2012
(73) Patentinhaber: BASF Coatings GmbH, 48165 Münster (DE)
(72) Erfinder: KUES, Jan-Bernd, 48155 Münster (DE); GROENEWOLT, Matthijs, 48147 Münster (DE); HOMANN, Karin, 48565 Steinfurt (DE); SCHRÖDER, Stefanie, 48155 Münster (DE); BROSSEIT, Andre, 59077 Hamm (DE)
(74) Vertreter: Leifert & Steffan
(86) Internationale Anmeldenummer: PCT/EP2010/001960
(87) Internationale Veröffentlichungsnummer: WO 2011/006552

(56) Entgegenhaltungen:
- EP-A1- 1 036 834
- WO-A1-01/64803
- US-A- 4 018 941
- US-A1- 2007 231 577

## Beschreibung

Die vorliegende Erfindung betrifft ein Verfahren zur Beschichtung von Polycarbonatsubstraten, bei dem ein Beschichtungsmittel umfassend mindestens ein strahlungshärtendes Bindemittel (A) und/oder Reaktiwerdünner (C), Nanopartikel (B), ggf. Lösemittel und mindestens ein Lichtschutzmittel (L), auf ein Polycarbonatsubstrat appliziert wird, hierfür geeignete Beschichtungsmittel sowie die durch das Verfahren erhältlichen beschichteten Polycarbonatsubstrate.

Als Ersatzmaterialien für Gläser, beispielsweise zur Produktion von Platten, Fenstern, Brillengläsern, optischen Linsen oder Automobil- und Flugzeugscheiben werden seit einigen Jahren vermehrt transparente Kunststoffe eingesetzt. Etabliert haben sich insbesondere Kunststoffe auf der Basis von Polycarbonaten und Polymethylmethacrylaten.

Die Verwendung derartiger Kunststoffe ist insbesondere für den Automobilbereich interessant, da sich mittels der Kunststoffe Formen realisieren lassen, die mit Glas als Werkstoff nicht oder nur mit unvertretbar hohem Aufwand realisiert werden können. So hat sich Polycarbonat beispielsweise schnell zur "Verglasung" von Automobilscheinwerfern durchgesetzt.

Neben der leichten Verformbarkeit liegt der Vorteil von Kunststoffen wie Polycarbonat nicht zuletzt auch darin, dass die Kunststoffe eine im Vergleich zu Glas wesentlich geringere spezifische Dichte aufweisen und so beispielsweise das Fahrzeuggewicht deutlich reduziert werden kann.

Polycarbonat ist zudem zähelastischer als Glas und kann daher Stöße mit Steinen durch Energiedissipation besser abfangen. Nachteilig wirkt sich bei Kunststoffen allerdings die im Vergleich zu Glas geringere Härte aus. Dadurch resulitiert eine geringere Beständigkeit gegenüber externen mechanischen Beschädigungen und somit eine geringere Kratzfestigkeit und eine geringere Abriebfestigkeit. Es ist daher insbesondere für den Einsatz derartiger Materialien in stark beanspruchenden Umgebungen notwendig, diese gegen Abrieb und Verkratzen zu schützen.

Gerade im Bereich der Automobilverglasung bestehen jedoch hohe Anforderungen, die durch die Normen ECE 43, ASTM 1044, ASTM 1003 festgelegt sind.

Zur Beschichtung von Polycarbonat mit einer kratzfesten Schicht, die im Abrasions-Test (geprüft mittels des Taber-Tests) hervorragende Ergebnisse aufweist, können Polymersysteme mit unterschiedlicher Zusammensetzung eingesetzt werden.

Für diesen Zweck werden verschiedentlich Sol-Gel-Systeme u.a. auch mit Hilfe von Plasma-Verfahren eingesetzt. Diese Systeme werden häufig aus modifizierten Silanen und Alkoxiden durch Hydrolyse- und Kondensationsprozesse hergestellt. Aufgrund der Reaktivität dieser Systeme ist die Lagerstabilität der Lackmischung meist sehr kurz. Zudem erschwert die Stabilität in solchen Systemen zumeist die Einstellung höherer Festkörper.

Außerdem werden auch strahlungshärtbare Beschichtungsmittel zur Beschichtung von Polycarbonatsubstraten eingesetzt. So werden in der US-A-6,420,451 strahlungshärtbare Beschichtungsmittel für die Beschichtung von optischen Substraten, beispielsweise Linsen, aus verschiedenen Kunststoffsubstraten, wie beispielsweise Polycarbonat, beschrieben. Die Beschichtungsmittel enthalten neben monofunktionellen Acrylaten Urethanacrylate und kolloidale Metalloxide, insbesondere SiO₂-Teilchen. Diese Beschichtungsmittel führen aufgrund ihres Gehaltes an Metalloxidteilchen zu Beschichtungen mit einer verbesserten Kratzfestigkeit und weisen außerdem eine gute Haftung auf verschiedenen Substraten sowie eine gute Kompatibilität zu antireflektierenden Beschichtungen im Falle der Beschichtung von optischen Linsen auf. Die dort beschriebenen Beschichtungsmittel enthalten außerdem bevorzugt auch noch übliche Lichtschutzmittel. Um allerdings eine gute Verträglichkeit der Lichtschutzmittel mit den Bindemitteln zu gewährleisten, was wiederum wesentlich für eine sehr gute Transparenz der resultierenden Beschichtungen ist, wird nur der Einsatz von 2,2',4,4'-tetrahydroxybenzophenon als Lichtschutzmittel empfohlen. Angaben, wie eine sehr hohe Transparenz der resultierenden Beschichtungen auch mit anderen Lichtschutzmitteln erreicht werden könnte, fehlen jedoch ebenso wie Angaben, wie eine sehr gute Witterungsbeständigkeit der resultierenden Beschichtungen zu erreichen ist.

Weiterhin sind in der WO06/028518 UV härtbare Beschichtungsmittel beschrieben, die mindestens ein strahlungshärtbares (Meth)Acrylat, anorganische Nanopartikel, insbesondere oberflächenmodifizierte SiO₂-Nanopartikel mit einer Partikelgröße von 5 bis 80 nm und mit einer engen Partikelgrößenverteilung; ggf. Reaktiwerdünner und ggf. Lichtschutzmittel enthalten. Bevorzugt werden gesättigte Lichtschutzmittel ohne ethylenische Doppelbindungeneingesetzt. Diese Beschichtungsmittel werden zur Herstellung von Beschichtungen mit verbesserter Abrasionsbeständigkeit, insbesondere von Kunststoffsubstraten, wie beispielsweise Straßenreflektoren, oder von Beschichtungen mit verbesserter Stabilität, wie der Beschichtung von Filterpapieren, beispielsweise für Ölfilter, eingesetzt. Polycarbonatsubstrate werden in der WO06/028518 jedoch nicht beschrieben.

Wie bereits ausgeführt, müssen für die Beschichtung von Polycarbonat geeignete Beschichtungsmittel aber nicht nur zu kratzfesten Beschichtungen härtbar sein, sie müssen darüber hinaus auch zu transparenten Beschichtungen mit sehr guten optischen Eigenschaften und mit einer sehr guten Haftung, auch nach Belastung durch Lagerung in Wasser, führen. Hinweise, wie die neben der Kratzfestigkeit geforderte Transparenz der beschichteten Substrate sowie die gute Haftung auf Polycarbonat erreicht werden könnte, sind entsprechend in der WO06/028518 nicht enthalten.

Aus der WO01/64803 sind nun Beschichtungsmittel insbesondere zur Herstellung von Klarlackierungen bekannt, die mindestens ein (Meth)-Acrylatcopolymerisat enthalten, das mindestens ein Lichtschutzmittel einpolymerisiert enthält. Diese Beschichtungsmittel weisen hierdurch eine gegenüber entsprechenden Beschichtungsmitteln mit herkömmlichen Lichtschutzmitteln verbesserte Transparenz und Witterungsbeständigkeit auf. Die dort beschriebenen Lichtschutzmittel weisen dabei (Meth)Acrylatgruppen auf, die über dessen Esterfunktion angebunden sind (d.h. sie wurden über eine Reaktion von Hydroxylgruppen des Lichtschutzmittels mit (Meth)Acrylsäure eingeführt). Die Lichtschutzmittel werden bevorzugt bereits in die Bindemittel eingebaut, d.h. die (Meth)Acrylatgruppen sind bereits vor der Vernetzung der Beschichtungsmittel abreagiert. Polycarbonatsubstrate werden auch in dieser Schrift nicht beschrieben. Ebenso fehlen auch hier Angaben, wie die im Vergleich zu Automobilklarlackierungen erhöhte Transparenz der resultierenden Beschichtungen gewährleistet werden kann.

Das Dokument US 2007/0231577 A1 offenbart in der Tabelle 1 ein Beschichtungsmittel für die Beschichtung von Polycarbonat. Das Lichtschutzmittel wird in die Bindemittel nicht eingebaut.

### Aufgabe

Der vorliegenden Erfindung lag daher die Aufgabe zugrunde, Beschichtungsmittel zur Verfügung zu stellen, die für die Beschichtung von Polycarbonatsubstraten geeignet sind. Die Beschichtungsmittel sollten daher zu gehärteten Beschichtungen mit einer hohen Transparenz und geringem Grauschleier (Haze-Werte der unbelasteten Beschichtung kleiner als 1, bevorzugt kleiner als 0,8, jeweils bestimmt mit Hilfe des BYK-Gardner Gerätes Haze-gard plus C4725) und niedrigen Gelbwerten (Gelbwerte der unbelasteten Beschichtung kleiner 2,5, bevorzugt kleiner 1,5, jeweils gemessen nach der NORM ASTM E 313) führen.

Darüber hinaus sollten die Beschichtungsmittel zu gehärteten Beschichtungen mit einer sehr guten Haftung (insbesondere bestimmt mittels Klebebandabriss gemäß ASTM D 3359 und ISO 2409) auf Polycarbonatsubstraten, auch nach Belastung durch Lagerung in Wasser, insbesondere im sogenannten Wasserlagerungstest gemäß ASTM 870-02 und ISO 2812-2, führen.

Ferner sollten die Beschichtungsmittel zu gehärteten Beschichtungen mit einer guten Witterungsstabilität, insbesondere bestimmt im Kurzbewitterungstest PV3990 entsprechend der Spezifikation VW PV-3920 Nov03 und/oder im CAM180-Test (nach DIN EN ISO 11341 Feb 98 und DIN EN ISO 4892-2 Nov 00), führen. Außerdem sollten die Beschichtungsmittel zu gehärteten Beschichtungen mit einer guten Kratz- und Abriebfestigkeit führen.

Schließlich sollten die Beschichtungsmittel einfach handhabbar sein und eine gute Verarbeitungsviskosität sowie einen guten Verlauf aufweisen.

### Lösung der Aufgabe

Im Lichte der obengenannten Aufgabenstellung wurde ein Verfahren zur Beschichtung von insbesondere transparenten Polycarbonatsubstraten gefunden, bei dem ein transparentes Beschichtungsmittel umfassend mindestens ein strahlungshärtendes Bindemittel (A) und/oder Reaktivverdünner (C), Nanopartikel (B), ggf. Lösemittel und mindestens ein Lichtschutzmittel (L), auf ein Polycarbonatsubstrat appliziert wird, das dadurch gekennzeichnet ist, dass das Beschichtungsmittel mindestens ein Lichtschutzmittel (L) enthält, welches im Mittel pro Molekül mindestens eine über eine Urethangruppe gebundene ethylenisch ungesättigte Gruppe, insbesondere über Urethangruppen gebundene Acrylat- oder Methacrylat- oder Acrylat- und Methacrylatgruppen, enthält.

Gegenstand der vorliegenden Erfindung sind außerdem die in diesem Verfahren eingesetzten Beschichtungsmittel sowie die durch das Verfahren erhältlichen beschichteten Polycarbonatsubstrate sowie deren Verwendung.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Verfahrens gelöst werden konnten.

So ist es insbesondere überraschend, dass durch die erfindungsgemäß eingesetzten Lichtschutzmittel mit über Urethangruppen gebundenen ethylenisch ungesättigten Gruppen, insbesondere Acrylat- bzw. Methacrylatgruppen, sowohl die Gelbwerte der resultierenden Beschichtung ohne Belastung als auch die Gelbwerte der resultierenden Beschichtung nach Bewitterung deutlich niedriger sind als bei Beschichtungen, die aus entsprechenden Beschichtungsmitteln erhalten werden, die unmodifizierte hydroxylgruppenhaltige Lichtschutzmittel oder Lichtschutzmittel, bei denen die Acrylat- bzw. Methacrylatgruppen über dessen Esterfunktion an die Lichtschutzmittel gebunden sind, enthalten. Insbesondere liegen die Gelbwerte der unbelasteten Beschichtung kleiner 2,5, bevorzugt kleiner 1,5, jeweils gemessen nach der NORM ASTM E 313.

Ferner können die erfindungsgemäßen Beschichtungsmittel zu transparenten Beschichtungen ohne Grauschleier, also mit einem niedrigen Haze-Wert kleiner als 1, bevorzugt kleiner als 0,8, jeweils bestimmt mit Hilfe des BYK-Gardner Gerätes Haze-gard plus C4725, gehärtet werden.

Vorteilhaft ist außerdem, dass durch die erfindungsgemäß eingesetzten Lichtschutzmittel mit über Urethangruppen gebundenen Acrylat- bzw. Methacrylatgruppen die Haftung der resultierenden Beschichtungen auf Polycarbonatsubstraten nach Wasserlagerung sowie die Witterungsbeständigkeit der resultierenden Beschichtungen deutlich besser sind als bei entsprechenden Beschichtungen auf Basis von Beschichtungsmitteln, die unmodifizierte hydroxylgruppenhaltige Lichtschutzmittel oder Lichtschutzmittel, bei denen die Acrylat- bzw. Methacrylatgruppen über dessen Esterfunktion an die Lichtschutzmittel gebunden sind, enthalten.

Ferner zeichnen sich die erfindungsgemäß erhaltenen Beschichtungen durch eine gute Kratz- und Abriebfestigkeit aus, das heißt, der Verbund aus Polycarbonatsubstrat und Beschichtung erfüllt die Anforderung des Taber-Tests. Vorteilhaft ist ferner, dass die erfindungsgemäß eingesetzten Beschichtungsmittel eine einfache Handhabbarkeit und eine gute Verarbeitungsviskosität sowie einen guten Verlauf aufweisen.

### Beschreibung der Erfindung

### Erfindungsgemäß eingesetztes Beschichtungsmittel

### Das Lichtschutzmittel (L)

Es ist erfindungswesentlich, dass das Beschichtungsmittel mindestens ein Lichtschutzmittel (L) enthält, welches im Mittel mindestens eine über Urethangruppen gebundene ethylenisch ungesättigte Gruppe pro Molekül enthält. Im Gegensatz zu der in käuflichen Lichtschutzmitteln üblichen Anbindung der UV reaktiven Gruppe über die Esterfunktion der (Meth)Acrylatgruppen hat die erfindungsgemäße Anbindung der ethylenisch ungesättigten Gruppe über eine Urethangruppe zur Folge, dass sowohl die Haze-Werte und die Gelbwerte der resultierenden Beschichtung ohne Belastung als auch die Haze-Werte und die Gelbwerte der resultierenden Beschichtung nach Bewitterung deutlich niedriger sind.

Es ist bevorzugt, dass das Beschichtungsmittel mindestens ein Lichtschutzmittel (L) enthält, welches 1,0 bis 20,0 g über Urethangruppen gebundene ethylenisch ungesättigte Gruppen pro 100 g Lichtschutzmittel, insbesondere 3,0 bis 15,0 g über Urethangruppen gebundene ethylenisch ungesättigte Gruppen pro 100 g Lichtschutzmittel, aufweist. Der Gehalt der Lichtschutzmittel an über Urethangruppen gebundenen ethylenisch ungesättigten Gruppen wird dabei bevorzugt experimentell mit Hilfe der NMR Spektroskopie, beispielsweise mit dem Spektrometer Direct Drive 500 der Firma Varian gemessen. Im Rahmen einer Dreifachbestimmung werden dazu jeweils 150mg der Analysenprobe in je 1 ml CDCI3 unter Zusatz von 1 mg Terephthalsäuredimethylester als innerem Standard gelöst und spektroskopiert.

Eine Abschätzung des Doppelbindungsgehaltes kann bekanntermaßen auch theoretisch unter der Annahme idealisierter Strukturen und der Annahme eines vollständigen Umsatzes aller Aufbaukomponenten und Berücksichtigung der für die Aufbaukomponenten angegebenen Parameter wie ggf. Molekulargewicht, Isocyanatgehalte, Doppelbindunggehalte und Gehalt der Lichtschutzmittel an gegenüber den Isocyanatgruppen reaktiven Gruppen erfolgen.

Im allgemeinen nimmt dabei die Kratzfestigkeit der resultierenden Beschichtung mit steigendem Gehalt an ethylenisch ungesättigten Gruppen der Lichtschutzmittel zu.

Bevorzugt werden erfindungsgemäß Lichtschutzmittel (L) eingesetzt, die im Mittel pro Molekül mindestens eine über eine Urethangruppe gebundene Acrylat- oder Methacrylatgruppe aufweisen. Besonders bevorzugt werden erfindungsgemäß Lichtschutzmittel (L) eingesetzt, die 1,0 bis 20,0 g jeweils über Urethangruppen gebundene Acrylat- oder Methacrylat- oder Acrylat- und Methacrylatgruppen pro 100 g Lichtschutzmittel, insbesondere 3,0 bis 15,0 g jeweils über Urethangruppen gebundene Acrylat- oder Methacrylat- oder Acrylat- und Methacrylatgruppen enthalten.

Als Beispiele für erfindungsgemäß eingesetzte Lichtschutzmittel (L) seien die entsprechenden strahlenhärtbaren Lichtschutzmittel mit im Mittel mindestens einer über eine Urethangruppe gebundenen ethylenisch ungesättigten Gruppe, insbesondere Acrylat- und/oder Methacrylatgruppen, auf Basis von sterisch gehinderten Aminen und/oder UV-Absorbern, wie beispielsweise Triazolen, Triazinen, Benzophenonen, Oxalaniliden sowie deren Mischungen genannt.

Bevorzugt enthält das Beschichtungsmittel als Lichtschutzmittel (L) eine Mischung aus einem Lichtschutzmittel (L1) auf Basis eines sterisch gehinderten Amins und einem Lichtschutzmittel (L2) auf Basis eines UV-Absorbers, wobei entweder
(i) das Lichtschutzmittel (L1) oder
(ii) das Lichtschutzmittel (L2) oder
(iii) das Lichtschutzmittel (L1) und das Lichtschutzmittel (L2)
im Mittel pro Molekül mindestens eine über Urethangruppen gebundene ethylenisch ungesättigte Gruppe, insbesondere über Urethangruppen gebundene Acrylatgruppen oder Methacrylatgruppen oder sowohl Acrylatals auch Methacrylatgruppen, enthalten. Bevorzugt enthalten das Lichtschutzmittel (L) oder das Lichtschutzmittel (L1) oder das Lichtschutzmittel (L2) oder sowohl das Lichtschutzmittel (L1) als auch das Lichtschutzmittel (L2) 1,0 bis 20,0 g jeweils über Urethangruppen gebundene Acrylat- oder Methacrylat- oder Acrylat- und Methacrylatgruppen pro 100 g Lichtschutzmittel, insbesondere 3,0 bis 15,0 g jeweils über Urethangruppen gebundene Acrylat- oder Methacrylat- oder Acrylat- und Methacrylatgruppen.

Besonders bevorzugt enthält das Beschichtungsmittel als Lichtschutzmittel (L) eine Mischung aus einem Lichtschutzmittel (L1) auf Basis eines sterisch gehinderten Amins und einem Lichtschutzmittel (L2) auf Basis eines UV-Absorbers, wobei das Lichtschutzmittel (L1) und das Lichtschutzmittel (L2) jeweils über Urethangruppen gebundene Acrylat- oder Methacrylat- oder Acrylat- und Methacrylatgruppen enthalten.

Bevorzugt sind außerdem Beschichtungsmittel, die mindestens ein Lichtschutzmittel enthalten, bei denen die Acrylat- oder die Methacrylat- oder die Acrylat- und Methacrylatgruppen dadurch in das Lichtschutzmittel eingeführt worden sind, dass
(i) ein Lichtschutzmittel (L") mit mindestens einer gegenüber Isocyanatgruppen reaktiven Gruppe (LG) oder ein Lichtschutzmittel (L1") mit mindestens einer gegenüber Isocyanatgruppen reaktiven Gruppe (LG) oder ein Lichtschutzmittel (L2") mit mindestens einer gegenüber Isocyanatgruppen reaktiven Gruppe (LG) oder eine Mischung aus einem Lichtschutzmittel (L1") mit mindestens einer gegenüber Isocyanatgruppen reaktiven Gruppe (LG) und einem Lichtschutzmittel (L2") mit mindestens einer gegenüber Isocyanatgruppen reaktiven Gruppe (LG) mit einer isocyanatgruppenhaltigen Verbindung (V) umgesetzt worden ist, und
(ii) das in Stufe (i) erhaltene isocyanatgruppenhaltige Lichtschutzmittel (L') bzw. (L1') bzw. (L2') mit einem Hydroxyalkylester der Acrylsäure oder mit einem Hydroxyalkylester der Methacrylsäure oder einer Mischung aus einem Hydroxyalkylester der Acrylsäure und einem Hydroxyalkylester der Methacrylsäure umgesetzt worden ist.

Als Lichtschutzmittel (L") mit mindestens einer gegenüber Isocyanatgruppen reaktiven Gruppe (LG) geeignet sind beispielsweise Lichtschutzmittel, die mindestens eine gegenüber Isocyanatgruppen reaktive Hydroxylgruppe und/oder Aminogruppe, bevorzugt Hydroxylgruppe, aufweisen. Insbesondere seien hydroxylgruppenhaltige sterisch gehinderte Amine sowie hydroxylgruppenhaltige UV-Absorber, bei denen die Hydroxylgruppe nicht an die UV-absorbierende Einheit gebunden ist, wie beispielsweise die entsprechenden hydroxylgruppenhaltigen Triazole, hydroxylgruppenhaltigen Triazine, hydroxylgruppenhaltigen Benzophenone und hydroxylgruppenhaltigen Oxalanilide, genannt.

Als hydroxylgruppenhaltiges Lichtschutzmittel (L1 ") auf Basis eines sterisch gehinderten Amins geeignet sind daher beispielsweise 2,4-bis[N-Butyl-N-(1-cyclohexyloxy-2,2,6,6-tetramethylpiperidin-4-yl)amino]-6-(2-hydroxyethylamin)-1,3,5-triazin (handelsübliches Lichtschutzmittel Tinuvin® 152 der Firma Ciba Speciality Chemicals), Bis(1,2,2,6,6-pentamethyl-4-piperidinyl)-2-butyl-2-(4-hydroxy-3,5-di-tert.butylbenzyl)propandioat (handelsübliches Lichtschutzmittel Tinuvin® 144 der Firma Ciba Speciality Chemicals) und/oder Butandicarbonsäure4-hydroxy-2,2,6,6-tetramethyl-1-piperidinethanol-polymer (handelsübliches Lichtschutzmittel Tinuvin® 622LD der Firma Ciba Speciality Chemicals) geeignet.

Als hydroxylgruppenhaltiges Lichtschutzmittel (L2") auf Basis eines UV-Absorbers, bei denen die Hydroxylfunktion nicht an die UV-absorbierende Einheit gebunden ist, geeignet sind beispielsweise Hydroxyphenyltriazine wie eine Mischung aus 2-[4-[(2-Hydroxy)-3-dodecyloxypropyl]oxy]-2-hydroxyphenyl]-4,6-bis-(2,4)-dimethylphenyl-1,3,5-triazin und 2-[4-[(2-Hydroxy)-3-tridecyloxypropyl]oxy]-2-hydroxyphenyl]-4,6-bis-(2,4)-dimethylphenyl-1,3,5-triazin (handelsübliches Lichtschutzmittel Tinuvin® 400 der Firma Ciba Speciality Chemicals), 2-[4-[(2-Hydroxy)-3-(2'-ethyl)hexyl)oxy]-2-hydroxyphenyl]-4,6-bis-(2,4)-dimethylphenyl-1,3,5-triazin (handelsübliches Lichtschutzmittel Tinuvin® 405 der Firma Ciba Speciality Chemicals), eine Mischung aus β-[3-(2-H-Benzotriazol-2yl)-4-hydroxy-5-tert.butylphenyl]-propionic acid-poly(ethylene glycol) 300-ester und Bis{β-[3-(2-H-Benzotriazol-2yl)-4-hydroxy-5-*tert*.butylphenyl]-propionic acid-poly(ethylene glycol) 300-ester (handelsübliches Lichtschutzmittel Tinuvin® 1130 der Firma Ciba Speciality Chemicals).

Besonders bevorzugte Beschichtungsmittel werden erhalten, wenn zur Umsetzung mit der isocyanatgruppenhaltigen Verbindung (V) in Stufe (i)
(i) das hydroxylgruppenhaltige Lichtschutzmittel (L1") 2,4-bis[N-Butyl-N-(1-cyclohexyloxy-2,2,6,6-tetramethylpiperidin-4-yl)amino]-6-(2-hydroxyethylamin)-1,3,5-triazin (handelsübliches Lichtschutzmittel Tinuvin® 152 der Firma Ciba Speciality Chemicals)
   und/oder
(ii) das Lichtschutzmittel (L2") mit mindestens einer gegenüber Isocyanatgruppen reaktiven Gruppe (LG) eine Mischung aus 2-[4-[(2-Hydroxy)-3-dodecyloxypropyl]oxy]-2-hydroxyphenyl]-4,6-bis-(2,4)-dimethylphenyl-1,3,5-triazin und 2-[4-[(2-Hydroxy)-3-tridecyloxy-propyl]oxy]-2-hydroxyphenyl]-4,6-bis-(2,4)-dimethylphenyl-1,3,5-triazin (handelsübliches Lichtschutzmittel Tinuvin® 400 der Firma Ciba Speciality Chemicals)
ist.

Als isocyanatgruppenhaltige Verbindung (V) sind prinzipiell alle an sich bekannten substituierten oder unsubstituierten aromatischen, aliphatischen, cycloaliphatischen und/oder heterocyclischen Isocyanate geeignet. Insbesondere werden als isocyanatgruppenhaltige Verbindung (V) solche Verbindungen eingesetzt, die im Mittel mindestens 2 Isocyanatgruppen pro Molekül, insbesondere 2 bis 8 Isocyanatgruppen pro Molekül und ganz besonders mehr als 2 bis 4 Isocyanatgruppen pro Molekül, enthalten.

Beispiele für geeignete Verbindungen (V) sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophoron-diisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiiso-cyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin geeignete Verbindungen (V) sind die Biuret-Dimere, die Uretdione, die Allophanate und die Isocyanurat-Trimere der vorgenannten Diisocyanate. Bevorzugt werden aliphatische und/oder cycloaliphatische Diisocyanate und deren die Biuret-Dimere, die Uretdione, die Allophanate und die Isocyanurat-Trimere eingesetzt. Besonders bevorzugte Verbindungen (V) sind Hexamethylen-1,6-diisocyanat, Isophorondiisocyanat und 4,4'-Methylendicyclohexyldiisocyanat, deren Biuret-Dimere und/oder Isocyanurat-Trimere.

Insbesondere zur Verbesserung der Kratzfestigkeit der resultierenden Beschichtung können zur Umsetzung mit dem Lichstschutzmittel (L") bzw. (L1") bzw. (L2") mit jeweils mindestens einer gegenüber Isocyanatgruppen reaktiven Gruppe (LG) auch isocyanatgruppenhaltige Verbindungen (V') eingesetzt werden, die im Mittel pro Molekül mindestens1 ethylenisch ungesättigte Doppelbindung enthalten. Selbstverständlich ist es auch möglich, das Lichtschutzmittel (L") mit mindestens einer gegenüber Isocyanatgruppen reaktiven Gruppe (LG) oder das Lichtschutzmittel (L1") mit mindestens einer gegenüber Isocyanatgruppen reaktiven Gruppe (LG) oder das Lichtschutzmittel (L2") mit mindestens einer gegenüber Isocyanatgruppen reaktiven Gruppe (LG) oder eine Mischung aus dem Lichtschutzmittel (L1") und dem Lichtschutzmittel (L2") mit jeweils mindestens einer gegenüber Isocyanatgruppen reaktiven Gruppe (LG) mit einer Mischung aus einer gesättigten isocyanatgruppenhaltigen Verbindung (V) und einer isocyanatgruppenhaltigen Verbindungen (V'), die im Mittel mindestens1 ethylenisch ungesättigte Doppelbindung pro Molekül enthält, umzusetzen.

Bevorzugt werden dabei Verbindungen (V') eingesetzt, die im Mittel 2 bis 8 ethylenisch ungesättigte Doppelbindungen pro Molekül, insbesondere im Mittel 2 bis 4 ethylenisch ungesättigte Doppelbindungen pro Molekül, aufweisen.

Als Beispiel für geeignete isocyanatgruppenhaltige Verbindungen (V'), die im Mittel mindestens1 ethylenisch ungesättigte Doppelbindung pro Molekül enthalten, sind alle entsprechenden oligomeren und/oder polymeren Verbindungen, wie beispielsweise ungesättigte, isocyanatgruppenhaltige Polyesteracrylate und Polyestermethacrylate, Polycarbonate, Urethanacrylate und Urethanmethacrylate, ungesättigte isocyanatgruppenhaltige Polysiloxane u.ä. geeignet. Bevorzugt werden Urethanacrylate und/oder Urethanmethacrylate und hierbei insbesondere aliphatische Urethanacrylate und/oder aliphatische Urethanmethacrylate eingesetzt.

Das in Stufe (i) erhaltene isocyanatgruppenhaltige Lichtschutzmittel (L') und/oder isocyanatgruppenhaltige Lichtschutzmittel (L1') und/oder (L2') wird anschließend in einer weiteren Stufe mit dem Hydroxyalkylester einer ethylenisch ungesättigten Mono- und/oder Di- und/oder Polycarbonsäure umgesetzt. Als Beispiele für geeignete Hydroxyalkylester seien die Ester der Acrylsäure und/oder der Methacrylsäure, der Fumar-, Croton- und/- oder Maleinsäure mit gesättigten und/oder ungesättigten Diolen und/oder Polyolen genannt.

Bevorzugt wird das in Stufe (i) erhaltene isocyanatgruppenhaltige Lichtschutzmittel (L') und/oder isocyanatgruppenhaltige Lichtschutzmittel (L1') und/oder (L2') umgesetzt mit einem Hydroxyalkylester der Acrylsäure und/oder der Methacrylsäure, besonders bevorzugt mit Hydroxyethylacrylat, Hydroxyethylmethacrylat, Trimethylolpropandiacrylat, Trimethylolpropandimethacrylat Pentaerythritdiacrylat, Pentaerythritdimethacrylat, Pentaerythrittriacrylat, Pentaerythrittrimethacrylat oder deren Mischungen. Das erfindungsgemäße Beschichtungsmittel enthält üblicherweise 2,5 bis 60,0 Gew.-%, bevorzugt 5,0 bis 40,0 Gew.-%, besonders bevorzugt 10,0 bis 30,0 Gew.-%, des Lichtschutzmittels (L) oder 2,5 bis 60,0 Gew.-%, bevorzugt 5,0 bis 30,0 Gew.-%, besonders bevorzugt 5,0 bis 15,0 Gew.-%, des Lichtschutzmittels (L1) und/oder 2,5 bis 60,0 Gew.-%, bevorzugt 5,0 bis 30,0 Gew.-%, besonders bevorzugt 5,0 bis 15,0 Gew.-%, des Lichtschutzmittels (L2), wobei alle Gew.-%-Angaben jeweils bezogen sind auf das Gewicht des Bindemittels (A) plus dem Gewicht der Nanopartikel (B) plus dem Gewicht des ggf. eingesetzten Reaktiwerdünners (C).

Selbstverständlich ist es auch möglich, zusammen mit dem Lichtschutzmittel (L) oder zusammen mit dem Lichtschutzmittel (L1) oder zusammen mit dem Lichtschutzmittel (L2) oder zusammen mit den Lichtschutzmitteln (L1) und (L2) noch ein oder mehrere andere Lichtschutzmittel (L3) einzusetzen, die keine über Urethangruppen gebundene ethylenisch ungesättigten Gruppen aufweisen. Als anderes Lichtschutzmittel (L3) können alle üblicherweise eingesetzten Lichtschutzmittel verwendet werden. Diese anderen Lichtschutzmittel (L3) können gesättigt oder ungesättigt sein, wobei aber bevorzugt ethylenisch ungesättigte Lichtschutzmittel (L3) eingesetzt werden. Typischerweise ist bei diesen ethylenisch ungesättigten Lichtschutzmitteln (L3) die Doppelbindung über eine Estergruppe gebunden.

Als Beispiel für geeignete andere Lichtschutzmittel (L3) seien die bereits oben aufgeführten, unmodifizierten hydroxylgruppenhaltigen Lichtschutzmittel (L1") auf Basis sterisch gehinderter Amine sowie die unmodifizierten hydroxylgruppenhaltigen Lichtschutzmittel (L2") auf Basis von UV-Absorbern genannt. Als Beispiel für geeignete ethylenisch ungesättigte Lichtschutzmittel (L3) sei (2-(2'-Hydroxy-5'methacryloxyethylphenyl)-2H-benzotriazol (handelsübliches Lichtschutzmittel Tinuvin® R796 der Firma Ciba Speciality Chemicals), 2,2,6,6,-Tetramethyl-4-piperydilmethacrylat (handelsübliches Lichtschutzmittel auf Basis eines sterisch gehinderten Amins ADK STAB LA-87 der Firma Adeka Palmarole) sowie die in der WO01/64803 aufgeführten ethylenisch ungesättigten Lichtschutzmittel (a1) bis (a4) genannt.

Besonders bevorzugte Beschichtungsmittel werden aber erhalten, wenn alle eingesetzten Lichtschutzmittel ethylenisch ungesättigte Doppelbindungen aufweisen, d.h. dass die Beschichtungsmittel als Lichtschutzmittel nur die erfindungsgemäßen Lichtschutzmittel (L) oder (L1) oder (L2) oder (L1) plus (L2) sowie ggf. ethylenisch ungesättigte Lichtschutzmittel (L3) enthalten. Ganz besonders bevorzugt sind Beschichtungsmittel, die ausschließlich die erfindungsgemäßen Lichtschutzmittel (L) oder (L1) oder (L2) oder (L1) plus (L2) enthalten.

### Das strahlungshärtbare Bindemittel (A)

Prinzipiell sind alle einer strahlungsinduzierten Polymerisation zugänglichen Oligo- oder Polymere, als sogenannte Präpolymere einsetzbar. Derartige Bindemittelkomponenten (A) besitzen vorzugsweise mindestens zwei ethylenisch ungesättigte terminale Gruppen. Als ethylenisch ungesättigte terminale Gruppen eignen sich beispielsweise Acrylat- oder Methacrylatgruppen. Die mindestens zwei ethylenisch ungesättigten terminalen Gruppen können hierbei gleich oder verschieden sein. Während für UVhärtende Systeme Acrylat-Gruppen bevorzugte terminale Gruppen sind, werden Methacrylate häufig über Elektronenstrahlung gehärtet.

Bevorzugt beträgt die Anzahl der ethylenisch ungesättigten terminalen Gruppen 2 bis 20, besonders bevorzugt 2 bis 14, ganz besonders bevorzugt 2 bis 9 und am besten 2 bis 8. Die ethylenisch ungesättigten terminalen Gruppen können innerhalb eines Bindemittelmoleküls gleich oder verschieden sein, d.h. es können beispielsweise Acrylat- neben Methacrylatgruppen oder anderen ethylenisch ungesättigten Gruppen vorliegen.

Sind als ethylenisch ungesättigte terminale Gruppen des Bindemittels Acrylat- und/oder Methacrylatgruppen vorhanden, so lässt sich die Struktur des Bindemittels durch die allgemeine Formel (I) 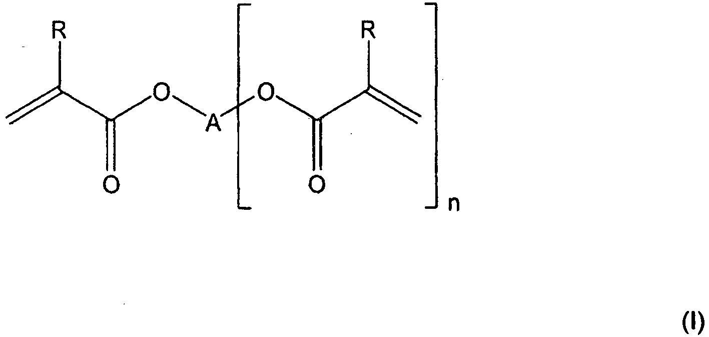 wiedergeben, worin die Reste R unabhängig voneinander für Wasserstoff oder eine Methylgruppe stehen, n für 1 bis 19 steht und A für einen (n+1)-valenten oligomeren oder polymeren Rest steht. A ist vorzugsweise gewählt aus der Gruppe der Polyurethane, Polyester, Polyether, Polymelamine, Polyallophanate, Polyisocyanurate, Polyepoxide und Polysiloxane. Der Wert für n beträgt vorzugsweise 1 bis 19, bevorzugter 1 bis 13, besonders bevorzugt 1 bis 8 und ganz besonders bevorzugt 1 bis 7.

Die nach dem erfindungsgemäßen Verfahren hergestellten beschichteten Polycarbonatsubstrate weisen für alle Reste A eine erhöhte Kratzbeständigkeit auf. Besonders vorteilhaft hinsichtlich einer zusätzlichen Chemikalienbeständigkeit haben sich solche Bindemittel der allgemeinen Formel (I) erwiesen, bei welchen A für einen Polyurethan-Rest, Polyester-Rest, Polyallophanat-Rest oder Polyisocyanurat-Rest steht. Hinsichtlich einer zusätzlichen Bewitterungsbeständigkeit sind als Reste A insbesondere Polyurethane bevorzugt.

Harze der allgemeinen Formel (I) werden im Allgemeinen als strahlenhärtende Acrylat- beziehungsweise Methacrylatharze bezeichnet. Im Gegensatz zu klassischen Acrylat- oder Methacrylatharzen besitzen die strahlenhärtenden Harze mindestens zwei endständige Kohlenstoff-Doppelbindungen. Unter "endständig" oder "terminal" werden in der vorliegenden Schrift bei einem ausschließlich linearen divalenten Rest A die Alpha- und Omegapositionen im Molekül verstanden, während bei kammartigen und dentritischen Strukturen von A auch die Kamm-Enden beziehungsweise die Arm-Enden vom Begriff "endständig" beziehungsweise "terminal" umfasst sind.

Die Verbindungen der allgemeinen Formel (I) werden durch den Einbau endständiger Acryl- oder Methacrylsäurereste an die von den Resten A abgeleiteten Präpolymere erhalten. Enthalten die Reste A endständig Hydroxylgruppen, so können Acrylsäure beziehungsweise Methacrylsäure unter Ausbildung von Esterbindung ankondensiert werden. Trägt A endständig Aminogruppen, so entstehen anstelle der Esterbindungen Amidbindungen. Prinzipiell sind alle dem Fachmann auf diesem Gebiet geläufigen Anbindungsstrategien einsetzbar. So können endständige Isocyanatgruppen der Reste A mit Hydroxyestern der Acrylsäure oder Methacrylsäure umgesetzt werden. Auch eine Additionsreaktion zwischen der Carboxylgruppe der Acrylsäure oder Methacrylsäure und Epoxygruppen ist möglich. Hierbei entstehen wiederum Hydroxygruppen, die einer Umsetzung mit Acrylsäure oder Methacrylsäure oder deren Säurechloriden zugänglich sind.

Beispiele für die durch UV-Bestrahlung vorzugsweise radikalisch vernetzenden Bindemittel mit mindestens zwei ethylenisch ungesättigten terminale Gruppen sind multiacryl- und/oder multimethacryl-funktionalisierte Polyurethane, Polyester, Polyether, Polymelamine, Polyallophanate, Polyisocyanurate, Polyepoxide und Polysiloxane und deren oligomere Formen, sowie deren Mischformen, wie beispielsweise gemischte Polyesterurethane. "Multifunktionell" bedeutet hierbei mindestens "difunktionell".

So können beispielsweise multiacrylat-funktionalisierte Bindemittel wie ein Epoxy-Diacrylat (Craynor 132 der Firma Sartomer), ein propoxyliertes Pentaerythritol-Triacrylat (Photomer 4171 der Firma Cognis Deutschland GmbH & Co. KG), ein Melamin-Pentaacrylat (Actilane 890 der Firma Akzo Nobel Chemical GmbH), ein aliphatisches Urethan-Hexaacrylat-Oligomer (Ebecryl® 1290 der Firma UCB GmbH), ein aliphatisches Urethan-Tetraacrylat-Oligomer (Sartomer® CN 925 der Firma Craynar) oder ein Esteracrylat (DPHA der Firma UCB GmbH) eingesetzt werden.

Durch die Wahl des Polymer- oder Oligomer-Rückgrats A des Bindemittels, also die Wahl von beispielsweise Polyurethan, Polyester, Polyether, Polymelamin, Polyallophanat, Polyisocyanurat, Polyepoxid oder Polysiloxane kann Einfluss auf die Eigenschaften der gehärteten Beschichtung, insbesondere hinsichtlich ihrer Chemikalienbeständigkeit, Lichtbeständigkeit, Zähigkeit, Haftung und Abriebfestigkeit genommen werden. Als vorteilhaft in ihrer Kombination der vorgenannten Eigenschaften erweisen sich vor allem Polyurethane, Polyester und Polyether, worunter ganz besonders Polyurethane und Polyester bevorzugt sind. Hinsichtlich ihrer Architektur kommen neben den linearen Verbindungen der allgemeinen Formel (I) auch solche mit kammartigen oder vorzugsweise dentritischen Strukturen in Frage. Unter den Verbindungen der Formel (I) sind insbesondere solche mit dentritischen Strukturen und endständigen Acrylsäure- beziehungsweise Methacrylsäuregruppen bevorzugt. Hierunter sind wiederum solche bevorzugt deren Oligomer-Rückgrat ein dentritischer Polyester ist. Solche Verbindungen zeichnen sich selbst bei hohen Molmassen durch relativ niedrige Viskositäten aus, ermöglichen hohe Vernetzungsdichten und eine Verbesserung der Kratzfestigkeit und Chemikalienbeständigkeit. Sie zeichnen sich darüber hinaus durch ein sehr geringes Schrumpfen bei schneller Härtung aus. Beim Einsatz acrylat- und/oder methacrylat-modifizierter dentritischer Polyester kann auf den Einsatz von Photoinitiatoren (PI) insbesondere dann gänzlich verzichtet werden, wenn beispielsweise aminische Synergisten, das heißt Amine mit einer Methylengruppe in Nachbarschaft des Stickstoffs in der Zusammensetzung vorhanden sind. Den aminischen Synergisten kommt die Aufgabe zu unter Radikalbildung die Sauerstoffinhibierung zu reduzieren. Auf den Einsatz von Synergisten kann folglich dann verzichtet werden, wenn unter Sauerstoffausschluss beispielsweise unter einer Inertgasatmosphäre wie einer Stickstoffatmosphäre gehärtet wird.

### Die Nanopartikel (B)

Als Nanopartikel (B) sind insbesondere oxidische anorganische Nanopartikel einer mittleren Teilchengröße von 1 bis 500 nm, vorzugsweise 3 bis 100 nm, besonders bevorzugt 5 bis 50 nm und ganz besonders bevorzugt 5 bis 30 nm geeignet. Naturgemäß besitzen Nanopartikel jedoch eine mittlere Teilchengröße im Nanometerbereich, wodurch sich diese von Teilchen einer mittleren Teilchengröße im Mikrometerbereich (beispielsweise 1 µm und mehr) abgrenzen. Unter "oxidisch anorganisch" wird verstanden, dass es sich hierbei im wesentlichen um Nanoteilchen aus einem Metalloxid, wie Aluminiumoxid oder einem Halbmetalloxid, wie Siliciumdioxid handelt. Letztere können beispielsweise aus wässrigen Alkalisilikatlösungen durch Ansäuren und anschließender Trocknung erhalten werden. Auch können sogenannte pyrogene Kieselsäuren, die durch Flammenhydrolyse von Siliciumhalogenverbindungen erhalten werden eingesetzt werden. Weiterhin ist es möglich, organofunktionelle Silane zu hydrolysieren und kondensieren, wobei wässrige oder wässrig alkoholische Kieselsäuresole entstehen. Diesen kann beispielsweise durch azeotrope Destillation der Wassergehalt entzogen werden. Die Bestimmung der mittleren Teilchengröße erfolgt vorzugsweise mittels dynamischer Lichtstreumessungen (ALV-Goniometer, Messwinkel 90°, Temperatur 23°C), wobei die Auswertung der Ergebnisse nach der Cumulant-Methode erfolgt.

Besonders bevorzugt sind jedoch Nanoteilchen, deren Oberfläche mit ankondensierten Verbindungen modifiziert ist. Eine Oberflächenmodifizierung erfolgt üblicherweise durch Anbindung der an der Nanopartikeloberfläche befindlichen Gruppen, wie bespielsweise Hydroxygruppen, an monomere oder oligomere Verbindungen. Diese monomeren oder oligomeren Verbindungen enthalten daher zumindest eine gegenüber den an der Nanopartikeloberfläche befindlichen Gruppen affine Gruppe. Die Anbindung kann beispielsweise durch kovalente Bindung, ionische Anbindung oder Physisorption erfolgen. Der nicht zur Anbindung an die Nanopartikeloberfläche benötigte Teil der monomeren oder oligomeren Verbindungen ragt vorzugsweise ganz oder teilweise in das die Nanopartikel umgebende Medium und trägt vorzugsweise zur Verbesserung der Verträglichkeit zwischen Nanopartikeln einerseits und den Komponenten (A) und/oder (C) andererseits bei. Derartige Nanoteilchen werden bevorzugt verwendet.

Die zur Oberflächenmodifizierung verwendeten monomeren oder oligomeren Verbindungen können neben der zur Anbindung an die Oberfläche der Nanopartikel erforderlichen Gruppe auch weitere funktionelle Gruppen enthalten, die beispielsweise in der Lage sind mit der Bindemittelkomponente (A) zu reagieren. Eine derartige Oberflächenmodifikation gelingt beispielsweise durch Zugabe hydrolysierbarer Silane, die ethylenisch ungesättigte Gruppen tragen, zu den oxidischen Nanoteilchen, vorzugsweise Kieselsäuren bzw. SiO2-Solen oder SiO2-Sol-Gelen.

Die Oberflächenmodifikation oxidischer anorganischer Silica-Nanoteilchen kann durch Ankondensieren der Silane an die Nanoteilchenoberfläche erfolgen. Die Herstellung der Nanoteilchen kann dabei so erfolgen, dass ausgehend von einer Alkalisilikatlösung eine Kondensation derselben unter Einfluss eines saueren Ionenaustauschers oder einer Säure bis zur gewünschten Teilchengröße herbeigeführt wird und dann gegebenenfalls nach Stabilisierung der Teilchen die Silane zugegeben werden, worauf diese (teil)hydrolysieren und an die Oberfläche der Teilchen ankondensieren. Dem resultierenden Sol werden gegebenenfalls unter Vakuum, durch (azeotrope) Destillation die wässrigen Bestandteile entzogen.

Käuflich erhältlich sind oberflächenmodifizierte Silica-Nanoteilchen beispielsweise von der Firma Byk unter der Bezeichnung Nanobyk oder der Firma nano resins AG aus Geesthacht, Deutschland unter der Bezeichnung Nanopol®.

Die Nanoteilchen (B) werden vorzugsweise in Lösungsmitteln dispergiert eingesetzt.

### Das ggf. verwendete Lösemittel und/oder ggf. verwendete Reaktivverdünner

Die im erfindungsgemäßen Verfahren eingesetzten Beschichtungsmittel können ggf. noch Lösemittel enthalten. Die erfindungsgemäß eingesetzten Beschichtungsmittel können zusätzlich zu dem Lösemittel oder anstelle des Lösemittels ggf. noch Reaktiwerdünner (C) enthalten. Der Einsatz von Reaktiwerdünnern ist hierbei unter dem Aspekt der Emissionsvermeidung bevorzugt, da die Reaktiwerdünner mit Komponente (A) copolymerisieren. Die Reaktiwerdünner beziehungsweise Lösemittel sind jedoch so zu wählen, dass sie sich in der eingesetzten Mischung der Lösemittel und/oder Reaktiwerdünner oder wenn diese unvermischt eingesetzt werden, sie selbst sich gegenüber dem Polycarbonatsubstrat weitestgehend optisch inert verhalten und dieses vorzugsweise hinsichtlich seiner Transparenz nicht beeinträchtigen. In diesem Sinne bedeutet "inert", dass für das Auge keine erkennbare Trübung vorhanden ist. Der Begriff "inert" schließt jedoch nicht aus, dass die Lösemittel und/oder Reaktiwerdünner das Polycarbonatsubstrat gezielt anquellen dürfen, was zu einer Verbesserung der Haftung beitragen kann. Eine weitere Aufgabe der Lösemittel und/oder Reaktiwerdünner besteht neben der Viskositätsherabsetzung der Beschichtungsmittel darin einen möglichst gleichmäßigen Verlauf der Beschichtungsmittelzusammensetzung auf dem Substrat zu erlauben.

Als Lösemittel sind insbesondere Ethanol, Isopropanol, n-Butanol, Ethylacetat, Butylacetat, Solventnaphta, Methylethylketon, 1-Methoxypropylacetat-2, Aceton oder Tetrahydrofuran geeignet, wobei insbesondere Kombinationen verschiedener Lösemittel bevorzugt sind. Besonders bevorzugt werden Kombinationen der Lösemittel Ethanol, Isopropanol, n-Butanol, Ethylacetat, Butylacetat, Methylethylketon und 1-Methoxypropylacetat-2 eingesetzt.

Reaktiwerdünner sind dabei bekanntermaßen niedermolekulare ethylenisch ungesättigte Verbindungen, insbesondere monomere ethylenisch ungesättigte Verbindungen.

Als Reaktivverdünner können beispielsweise niedermolekulare Acrylsäureester oder Methacrylsäureester eingesetzt werden. Hierunter zählen zum Beispiel die Acrylsäureester und Methacrylsäureester des Trimethylolpropans, Pentaerythrits und Dipentaerythrits, alkoxyliertes Glycerintriacrylat oder alkoxyliertes Glycerintrimethacrylat, wie beispielsweise propoxyliertes Glycerintriacrylat oder propoxyliertes Glycerintrimethacrylat, Tris-(2-hydroxyethyl)iso-cyanotriacrylat, Tris-(2-hydroxyethyl)iso-cyanotrimethacrylat, acrylsäuremodifizierte Kohlensäureester und Oxazolidone, Isobornylacrylat, Tetrahydrofurylacrylate, 1,6 Hexandioldiacrylat, Laurylacrylat, Isodecylacrylat und Octyldecylacrylat.

### Weitere Bestandteile der erfindungsgemäß eingesetzten Beschichtungsmittels

Die im erfindungsgemäßen Verfahren eingesetzten Beschichtungsmittel können vorteilhafterweise Photoinitiatoren (PI) enthalten. Wie oben bereits dargestellt, ist die Zugabe der Photoinitiatoren hinsichtlich ihrer Art und Menge vom eingesetzten Bindemittel (A) abhängig und kann im Falle der Verwendung dendritischer Polyesteracrylate sogar unterbleiben. In letzterem Fall ist es dann jedoch vorteilhaft, wenn das Beschichtungsmittel aminische Synergisten enthält.

Als Photoinitiatoren sind insbesondere solche aus der Gruppe bestehend aus alpha-Hydroxyketonen, alpha-Aminoketonen, Phenylglyoxylaten, Benzyldimethylketalen, Monoacylphosphinen, Bisacylphosphinen, Phosphinoxiden, Metallocenen und Iodoniumsalzen geeignet. Bevorzugte Beispiele sind unter anderem 1-Hydroxy-cyclohexylphenylketon (Irgacure® 184), 2-Hydroxy-2-methyl-1-phenyl-1-propanon (Iragcure® 1173) 2-Hydroxy-1-{4-[4-(2-hydroxy-2-methyl-propionyl)-benzyl]-phenyl}-2-methyl-propan-1-on (Irgacure® 127), 2-Hydroxy-1-[4-(2-hydroxyethoxy) phenyl]-2-methyl-1-propanon (Irgacure 2959), Methylbenzoylformal (Darocure® MBF) Phosphinoxid, Phenylbis(2,4,6-trimethylbenzoyl) (Iragcure® 819) und Diphenyl (2,4,6-trimethylbenzoylphosphinoxid (Lucirin® TPO).

Vorteilhafterweise enthalten die erfindungsgemäßen Beschichtungsmittel noch übliche Verlaufsmittel, insbesondere in ungesättigten Beschichtungsmitteln übliche Verlaufsmittel. Bevorzugt werden Verlaufsadditive eingesetzt, die eine oder mehrere ethylenische Doppelbindungen enthalten, welche während des Aushärtungsprozesses mit den ethylenischen Doppelbingungen des Bindemittels reagieren können. Als Beispiel für ein solches bevorzugt eingesetztes Verlaufsmittel sei Byk UV 3570 genannt. Neben den oben genannten Bestandteilen (A) und/oder (C), (B), (L), ggf. (PI) und ggf. dem Lösemittel können die im erfindungsgemäßen Verfahren eingesetzten Beschichtungsmittel noch weitere klarlacktypische Additive wie beispielsweise Verlaufmittel, Haftvermittler, Entlüfter und Netzmittel enthalten.

Die Komponenten (A), (B), (PI) sowie die klarlacktypischen Additive können dem im erfindungsgemäßen Verfahren eingesetzten Beschichtungsmittel in gelöster oder dispergierter Form zugegeben werden. Die hierfür verwendeten Lösungsmittel und/oder Reaktiwerdünner dieser Komponenten sind, was das komplette Beschichtungsmittel angeht, dem Reaktivverdünner (C) bzw. dem Lösemittel zuzuordnen. Das heißt Bestandteil (C) umfaßt auch die Reaktiwerdünner, die über die anderen Komponenten ins Beschichtungsmittel gelangen. Um einen besonders guten Verlauf der Beschichtung zu gewährleisten und somit besonders glatte Oberflächen zu erhalten, können dem erfindungsgemäß einsetzbaren Beschichtungsmittel handelsübliche Verlaufmittel wie beispielsweise Byk® 333, BYK® 310 zugegeben werden. Durch derartige Zusätze wird die Oberflächenspannung des UV-Lackes gesenkt, so dass eine gute Benetzung des Substrates unter entsprechenden Applikationsbedingungen gewährleistet ist.

Bei Bedarf können Haftvermittler eingesetzt werden, die die dauerhafte Zwischenhaftung zum Untergrund (z.B. Polycarbonat) und/oder Primer gewährleisten. Beispiele dieser Additivklasse sind chlorierte Polyolefine, saure Polyester oder Phosphorsäureaddukte.Gegebenfalls ist auch der Einsatz von Entlüftern notwendig, um Kocher auf der Lackoberfläche zu vermeiden. Hierfür eignen sich handelsübliche Entlüfter wie z.B. Byk-A 500, Byk-A 50, Byk-A 515, BYK 390, BYK 306, BYK 315 und BYK 356.

Vorzugsweise enthalten die erfindungsgemäß eingesetzten Beschichtungsmittel, bezogen auf das Gewicht des Bestandteils (A) plus dem Gewicht der Nanopartikel (B) plus dem Gewicht des ggf. eingesetzten Reaktivverdünners (C):
(A) 0 bis 95 Gew.%, besonders bevorzugt 10 bis 80 Gew.-% und ganz besonders bevorzugt 15 bis 60 Gew.-%, mindestens eines strahlungshärtenden Bindemittels (A),
(B) 5 bis 60 Gew.-%, besonders bevorzugt 10 bis 55 Gew.-% und ganz besonders bevorzugt 30 bis 50 Gew.% an Nanopartikeln (B) und
(C) 0 bis 95 Gew.-%, besonders bevorzugt 10 bis 70 Gew.-%, und ganz besonders bevorzugt 10 bis 40 Gew.%, mindestens eines gegenüber Polycarbonat inerten Reaktivverdünners, wobei sich das Gewicht des Bestandteils (A), der Nanopartikel (B) und das Gewicht des Reaktiwerdünners (C) immer zu 100% addieren. Auf das Gesamtgewicht aus Bestandteil (A) plus (B) plus ggf. Reaktivverdünner bezogen werden 5 bis 60, bevorzugt 10 bis 55 und besonders bevorzugt 30 bis 50 Gew.-% der Siliciumdioxid-Nanopartikel (B) eingesetzt.

Wenn Lösemittel vorhanden sind, können diese in einer Menge von bis zu 80 Gew.-% bezogen auf das gesamte Beschichtungsmittel, enthalten sein.

Schließlich enthält das Beschichtungsmittel vorzugsweise
0 bis 10, besonders bevorzugt 1 bis 6 und ganz besonders bevorzugt 2 bis 4 Gew.-% eines oder mehrerer Photoinitiatoren (PI), wobei die Mengenangaben bezogen sind auf das Gesamtgewicht des Bindemittels (A) plus dem Gewicht des ggf. eingesetzten Reaktivverdünners (C), und
0 bis 15, besonders bevorzugt 0,5 bis 10 und ganz besonders bevorzugt 0,5 bis 5 Gew.-% weiterer klarlacktypischer Additive,
wobei die Mengenangaben jeweils bezogen sind auf das Gesamtgewicht des Beschichtungsmittels.

### Polycarbonatsubstrat

Als Polycarbonat oder Polycarbonatsubstrat werden in der vorliegenden Erfindung sowohl Homopolycarbonate als auch Copolycarbonate verstanden. Die Polycarbonate können in bekannter Weise linear oder verzweigt sein. Auch kann ein Teil der Carbonatgruppen der Homo- oder Copolycarbonate durch Dicarbonsäureestergruppen oder andere polycarbonatverträgliche Gruppen ersetzt sein. Bevorzugt unter den Dicarbonsäureestergruppen sind aromatische Dicarbonsäureestergruppen. Enthalten die Polycarbonate neben Kohlensäureresten Dicarbonsäurereste, so spricht man auch von Polyestercarbonaten, die wie oben dargelegt ebenfalls unter den Begriff der Polycarbonate fallen. Sind Dicarbonsäureestergruppen enthalten, so können diese in einem Anteil von bis zu 80 Mol-%, vorzugsweise 20 bis 50 Mol-% vorliegen.

Polycarbonate können nach allen aus der Literatur bekannten Verfahren hergestellt werden. Geeignete Verfahren zur Herstellung von Polycarbonaten sind beispielsweise die Herstellung aus Bisphenolen mit Phosgen nach dem Phasengrenzflächenverfahren oder dem Verfahren aus homogener Phase (Pyridin-Verfahren) oder aus Bisphenolen mit Kohlensäureestern nach dem Schmelzeumesterungsverfahren. Diese Herstellverfahren sind beispielsweise beschrieben in H. Schnell, "Chemistry and Physics of Polycarbonates", Polymer Reviews, Band 9, S. 31 bis 76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P. R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299. Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in den DE 10 31 512 A, US 3 022 272, US 5 340 905 und US 5 399 659. Die nach den oben beschriebenen Verfahren hergestellten Polycarbonate besitzen ein gewichtsmittleres Molekulargewicht Mw von vorzugsweise 12000 bis 400000 g/mol, besonders bevorzugt von 18000 bis 80000 g/mol und ganz besonders bevorzugt von 22000 bis 60000 g/mol.

Die Polycarbonate beziehungsweise Polycarbonatsubstrate können in beliebiger räumlicher Form, wie zum Beispiel als Platten, Fenster, Lärmschutzwänden, Brillengläser, optische Linsen oder Teile von Kraftfahrzeugen, wie Motorräder, Busse, LKW oder PKW, Nutzfahrzeugen und/oder Flugzeugteile, wie beispielsweise Scheiben, insbesondere Heck- und unbewegliche Seitenscheiben, sowie Scheinwerfergläser bzw. Streuscheiben von Fahrzeugen, insbesondere Automobilen, und Flugzeugen, und dergleichen vorliegen. Besonders bevorzugt sind transparente Polycarbonate beziehungsweise Polycarbonatsubstrate, bevorzugt mit einer Transmission >80% des sichtbaren Lichts. Ebenfalls als Polycarbonatsubstrat geeignet sind beispielsweise Compact Discs (CD) oder Digital Video Discs bzw. Digital Versatile Discs (DVD).

### Applikation und Härtung des Beschichtungsmittels sowie beschichtete Polycarbonatsubstrate

Der Auftrag auf das Substrat erfolgt durch Standard-Beschichtungsverfahren wie z.B. Tauchen, Fluten, Spritzen, Streichen, Rakeln, Walzen, Sprühen, Fallfilmauftrag, Spincoating oder Schleudern. Besonders vorteilhaft ist das Aufbringen der Beschichtungsmittel in einem Tauch- oder Flutprozess sowie per Spritzapplikation mit niedriger Schichtdicke und gutem Verlauf.

Das Polycarbonatsubstrat kann hierzu vor der Applikation des Beschichtungsmittels mit einem Primer vorbehandelt werden. Als Primer eignen sich beispielsweise Zusammensetzungen wie sie im erfindungsgemäßen Verfahren verwendet werden, die jedoch keine Nanopartikel (B) enthalten. Vorzugsweise erfolgt das erfindungsgemäße Verfahren ohne Primerbehandlung des Substrats. Besonders bevorzugt erfolgt das erfindungsgemäße Verfahren im Einschichtverfahren, das heißt durch Aufbringen von nur einer Schicht des Beschichtungsmittels direkt auf das nicht chemisch vorbehandelte Polycarbonatsubstrat.

Nach dem Aufbringen, gegebenenfalls Abtropfen und anschließendem Ablüften der Beschichtung in der dem Fachmann bekannten Weise, erfolgt die Härtung der Beschichtung. Die Härtung kann durch Einwirkung energiereicher Strahlung, beispielsweise UV-Strahlung oder Elektronenstrahlung erfolgen. Als Strahlenquellen werden bevorzugt Quecksilber-Niederdruckstrahler, Mitteldruckstrahler, Hockdruckstrahler sowie Leuchtstoffröhren, Impulsstrahler oder Eximerstrahler verwendet, die vorzugsweise Licht in einem Wellenlängenbereich zwischen λ = 200 bis 700 nm, besonders bevorzugt von λ = 200 bis 500 nm und ganz besonders bevorzugt λ = 200 bis 400 nm emittieren. Weiterhin sind Strahlersysteme zu bevorzugen, die durch Modifikation des Reflektors eine geringe Wärmebelastung des Substrats erzielen. Solche Strahlersysteme sind als URS-Reflektorsysteme der Fa. IST Metz GmbH bekannt. Die üblicherweise für die UV-Härtung ausreichende Strahlendosis liegt zwischen 100 bis 6000 mJ/cm², besonders bevorzugt 1000 bis 4000 mJ/cm² und ganz besonders bevorzugt bei 2000 bis 3000 mJ/cm². Abhängig vom Abstand zwischen Substrat und UV-Lampe, Strahlerleistung und Reflektorsystem finden UV-Bestrahlungsstärken zwischen 100 bis 6000 mW/cm², bevorzugt 1000 bis 4000 mW/cm² und ganz besonders bevorzugt 2000 bis 3000 mW/cm² Anwendung.

Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Gew.-%). Die Atmosphäre kann im Grunde auch sauerstofffrei sein, d.h. es handelt sich um ein Inertgas. Als Inertgase eignen sich Kohlendioxid, Stickstoff, Edelgase oder Verbrennungsgase. Bevorzugter Bereich einer UV-Härtung in sauerstoffabgereicherter Atmosphäre ist zwischen 0,1 bis 5 Gew.-% Restsauerstoff. Ebenso kann die Bestrahlung der Beschichtungsmasse unter transparenten Medien wie Kunststofffolien, Glas oder Flüssigkeiten erfolgen. Die Bestrahlung unter einer sauerstoffabgereicherten Atmosphäre wirkt sich insbesondere auf die spätere Chemikalienbeständigkeit der gehärteten Beschichtung günstig aus.

Nach der Härtung sind Beschichtung und Substrat transparent. Die auf dem Polycarbonatsubstrat erhaltene Beschichtung weist nach der Härtung und vor Belastung einen Haze-Wert kleiner als 1, bevorzugt kleiner als 0,8, jeweils bestimmt mit Hilfe des BYK-Gardner Gerätes Haze-gard plus C4725, auf.

Nach einer Kratzbelastung, gemessen mit dem Taber-Test in Anlehnung an ASTM 1044-05 und ASTM 1003-00, weist die belastete Beschichtung einen Haze-Wert von ≤15 %, vorzugsweise ≤10%, besonders bevorzugt ≤8% auf, jeweils bestimmt mit Hilfe des BYK-Gardner Gerätes Haze-gard plus C4725.

Die Funktionalität des Bindemittels (A) sollte vorzugsweise 2 bis 20, besser 3 bis 10 oder 3 bis 9 betragen.

Weiterer Gegenstand der Erfindung sind beschichtete Polycarbonatsubstrate erhältlich durch das erfindungsgemäße Verfahren. Hierbei kann es sich beispielsweise um Platten, Fenster, Brillengläser, optische Linsen oder Fahrzeug- und Flugzeugteile, Abdeckungen, Compact Discs, Digital Versatile Discs oder Digital Video Discs handeln. Darüber hinaus Gegenstand der Erfindung ist auch das in dem Verfahren eingesetzte Beschichtungsmittel sowie die Verwendung des Beschichtungsmittels zur Beschichtung von insbesondere transparenten Polycarbonatsubstraten.

Im Folgenden wird die Erfindung anhand von Beispielen näher erläutert.

### Beispiele

### Herstellung eines ungesättigten, sterisch gehinderten Amins auf Basis 2,4-bis[N-Butyl-N-(1-cyclohexyloxy-2,2,6,6-tetramethylpiperidin-4-yl)amino]-6-(2-hydroxyethylamin)-1,3,5-triazin (HALS L1-1)

In einem 3 L Laborreaktor werden 276,25 g Desmodur® N3600 (handelsübliches, trimertisiertes Hexamethylendiisocyanat mit einem NCO-Gehalt von 23,0 % der Firma Bayer Material Science AG) und 13,5 g DBTL (Dibutylzinnlaurat) in 200 g MEK (Methylethylketon) vorgelegt. Bei Raumtemperatur wird nun ein Gemisch aus 361,26 g Tinuvin® 152 (2,4-bis[N-Butyl-N-(1-cyclohexyloxy-2,2,6,6-tetramethylpiperidin-4-yl)amino]-6-(2-hydroxy-ethylamin)-1,3,5-triazin; handelsübliches Lichtschutzmittel der Firma Ciba Speciality Chemicals) und 112,49 g HEA ((2-Hydroxy)ethylacrylat) in 550 g MEK über einen Tropftrichter mit Druckausgleich zugetropft. Nach vollständiger Zugabe wird das Reaktionsgemisch auf 50 °C erwärmt und solange bei dieser Temperatur gehalten bis alle NCO-Funktionen umgesetzt worden sind. Schließlich wird die Reaktionslösung auf Raumtemperatur abgekühlt, mit 0,05 % Methylhydrochinon versetzt, abgelassen und der Festkörper nach DIN EN ISO 3251 bestimmt.
FK 130°C: 50,60 %
Doppelbindungsgehalt (¹H-NMR): 3,6 g/100g

Der Gehalt der Lichtschutzmittel an über Urethangruppen gebundenen ethylenisch ungesättigten Gruppen wird dabei experimentell mit Hilfe der NMR Spektroskopie mit dem Spektrometer Direct Drive 500 der Firma Varian gemessen. Im Rahmen einer Dreifachbestimmung werden dazu jeweils 150mg der Analysenprobe in je 1 ml CDCl3 unter Zusatz von 1 mg Terephthalsäuredimethylester als innerem Standard gelöst und spektroskopiert. Zur Bestimmung des NCO-Gehalts wird eine Probe mit Dibutylamin versetzt und der Überschuss an Dibutylamin gegen Bromphenolblau als Indikator mit Salzsäure zurücktitriert.

### Herstellung eines ungesättigten, sterisch gehinderten Amins auf Basis 2,4-bis[N-Butyl-N-(1-cyclohexyloxy-2,2,6,6-tetramethylpiperidin-4-yl)amino]-6-(2-hydroxyethylamin)-1,3,5-triazin (HALS L1-2)

In einem 3 L Laborreaktor werden 319,50 g Desmolux® D 100 (handelsübliches aliphatisches Urethanacrylat mit einem NCO-Gehalt von 12,8 % der Firma Bayer Material Science AG) und 13,5 g DBTL (Dibutylzinnlaurat) in 490 g MEK (Methylethylketon) vorgelegt. Bei Raumtemperatur wird nun ein Gemisch aus 241,50 g Tinuvin® 152 (2,4-bis[N-Butyl-N-(1-cyclohexyloxy-2,2,6,6-tetramethylpiperidin-4-yl)amino]-6-(2-hydroxyethylamin)-1,3,5-triazin; handelsübliches Lichtschutzmittel der Firma Ciba Speciality Chemicals) und 189,00 g SR 444D (handelsübliches Pentaerythritoltriacrylat der Firma Sartomer) in 260 g MEK über einen Tropftrichter mit Druckausgleich zugetropft. Nach vollständiger Zugabe wird das Reaktionsgemisch auf 50 °C erwärmt und solange bei dieser Temperatur gehalten bis alle NCO-Funktionen umgesetzt worden sind. Schließlich wird die Reaktionslösung auf Raumtemperatur abgekühlt, mit 0,05 % Methylhydrochinon versetzt, abgelassen und der Festkörper nach DIN EN ISO 3251 bestimmt.
FK (60' 130°C): 50,3 %
Doppelbindungsgehalt (¹H-NMR): 10,1 g/100g

### Herstellung eines ungesättigten, sterisch gehinderten Amins auf Basis 2,4-bis[N-Butyl-N-(1-cyclohexyloxy-2,2,6,6-tetramethylpiperidin-4-yl)amino]-6-(2-hydroxyethylamin)-1,3,5-triazin (HALS L1-3)

In einem 3 L Laborreaktor werden 300,00 g Desmodur® N3600 (handelsübliches, trimertisiertes Hexamethylendiisocyanat mit einem NCO-Gehalt von 23,0 % der Firma Bayer Material Science AG) und 18 g DBTL (Dibutylzinnlaurat) in 600 g MEK (Methylethylketon) vorgelegt. Bei Raumtemperatur wird nun ein Gemisch aus 390,00 g Tinuvin® 152 (2,4-bis[N-Butyl-N-(1-cyclohexyloxy-2,2,6,6-tetramethylpiperidin-4-yl)amino]-6-(2-hydroxyethylamin)-1,3,5-triazin; handelsübliches Lichtschutzmittel der Firma Ciba Speciality Chemicals) und 310,00 g SR 444D (handelsübliches Pentaerythritoltriacrylat der Firma Sartomer) in 400 g MEK über einen Tropftrichter mit Druckausgleich zugetropft. Nach vollständiger Zugabe wird das Reaktionsgemisch auf 50 °C erwärmt und solange bei dieser Temperatur gehalten bis alle NCO-Funktionen umgesetzt worden sind. Schließlich wird die Reaktionslösung auf Raumtemperatur abgekühlt, mit 0,05 % Methylhydrochinon versetzt, abgelassen und der Festkörper nach DIN EN ISO 3251 bestimmt.
FK 130°C: 51,20 %
Doppelbindungsgehalt (¹H-NMR): 13,6 g/100g

### Herstellung eines ungesättigten UV-Absorbers auf Basis 2-[4-[(2-Hydroxy)-3-dodecyloxypropyl]oxy]-2-hydroxyphenyl]-4,6-bis-(2,4)-dimethylphenyl-1,3,5-triazin (UV Absorber L2-1)

In einem 3 L Laborreaktor werden 296,97 g Desmodur® N3600 (handelsübliches, trimertisiertes Hexamethylendiisocyanat mit einem NCO-Gehalt von 23,0 % der Firma Bayer Material Science AG) und 13,5 g DBTL (Dibutylzinnlaurat) in 200 g MEK (Methylethylketon) vorgelegt. Bei Raumtemperatur werden nun 332,10 g einer Mischung aus 2-[4-[(2-Hydroxy)-3-dodecyloxypropyl]oxy]-2-hydroxyphenyl]-4,6-bis-(2,4)-dimethylphenyl-1,3,5-triazin und 2-[4-[(2-Hydroxy)-3-tridecyloxypropyl]oxy]-2-hydroxyphenyl]-4,6-bis-(2,4)-dimethylphenyl-1,3,5-triazin, gelöst in 550 g MEK (Methylethylketon) über einen Tropftrichter mit Druckausgleich zugetropft. Nach vollständiger Zugabe wird das Reaktionsgemisch auf 50 °C erwärmt und solange bei dieser Temperatur gehalten bis 1/3 aller NCO-Funktionen umgesetzt worden sind.
Anschließend werden bei 50 °C 120,93 g HEA ((2-Hydrox)ethylacrylat) zu der Reaktionslösung gegeben und auf Raumtemperatur abgekühlt, sobald ein NCO-Gehalt von 0.00 % vorliegt. Abschließend mit 0,05 % Methylhydrochinon versetzt, abgelassen und der Festkörper nach DIN EN ISO 3251 bestimmt.
FK 130°C: 51,30 %
Doppelbindungsgehalt (¹H-NMR): 3,5 g/100g

### Herstellung eines ungesättigten UV-Absorbers auf Basis 2-[4-[(2-Hydroxy)-3-dodecyloxypropyl]oxy]-2-hydroxyphenyl]-4,6-bis-(2,4)-dimethylphenyl-1,3,5-triazin (UV Absorber L2-2)

In einem 3 L Laborreaktor werden 336 g Desmolux® D 100 (handelsübliches aliphatisches Urethanacrylat mit einem NCO-Gehalt von 12,8 % der Firma Bayer Material Science AG) und 13,5 g DBTL (Dibutylzinnlaurat) in 200 g MEK (Methylethylketon) vorgelegt. Bei Raumtemperatur werden nun 214,5 g einer Mischung aus 2-[4-[(2-Hydroxy)-3-dodecyloxypropyl]oxy]-2-hydroxyphenyl]-4,6-bis-(2,4)-dimethylphenyl-1,3,5-triazin und 2-[4-[(2-Hydroxy)-3-tridecyloxypropyl]oxy]-2-hydroxyphenyl]-4,6-bis-(2,4)-dimethylphenyl-1,3,5-triazin, gelöst in 350 g MEK über einen Tropftrichter mit Druckausgleich zugetropft. Nach vollständiger Zugabe wird das Reaktionsgemisch auf 50 °C erwärmt und solange bei dieser Temperatur gehalten bis 1/3 aller NCO-Funktionen umgesetzt worden sind. Anschließend werden bei 50 °C 199,50 g SR 444D (handelsübliches Pentaerythritoltriacrylat der Firma Sartomer) in 200 g MEK zu der Reaktionslösung gegeben und auf Raumtemperatur abgekühlt, sobald ein NCO-Gehalt von 0.00 % vorliegt. Abschließend mit 0,05 % Methylhydrochinon versetzt, abgelassen und der Festkörper nach DIN EN ISO 3251 bestimmt.
FK 130°C: 58,70 %
Doppelbindungsgehalt (¹H-NMR): 9,7 g/100g

### Vorbehandlung des Substrates (Polycarbonat)

Wie in der Literatur allgemein bekannt, werden durch zu schnelles Abkühlen des Substrates während der Herstellung Spannung eingefroren. Daher wird das zu beschichtende Polycarbonat vor der Lackapplikation bei 120°C entspannt, um Spannungsrisse zu vermeiden. Nach 1 h bei dieser Temperatur wird die Tafel abgekühlt und mit Isopropanol abgewischt. Des weiterem ist allgemein bekannt, dass durch Vorbehandlung mit UV-Licht der Verbund zwischen der Kunststoffoberfläche und der Beschichtung verbessert werden kann. Um eine ausreichende chemische Oxidation der Oberfläche zu erhalten wird das zu beschichtende Substrat, in speziellen Fällen, vor der Applikation mit UV-Licht behandelt (IST-Lignocure-Anlage, ausgestattet mit zwei UV-Lampen (Quecksilber-Lampen) die beide auf 100%ige Leistung gestellt werden, Dosis 1 J/cm2.

### Beispiel 1: Herstellung einer erfindungsgemäßen Beschichtung B1

In einem braunen Standglas werden 2,3 g n-Butanol, 13,31 g Isopropanol, 11,40 Ethanol, 1,61 g Tinuvin® 400 (85 %ig in 1-Methoxy-2-Propanol) und 5,60 g des ungesättigten, sterisch gehinderten Amins (HALS L1-1) (50,8 %ig in Methylethylketon) gemischt. Anschließend werden 0,27 g Irgacure® 819 (handelsüblicher Photoinitiator der Firma Ciba Speciality Chemicals; Bis(2,4,6-trimethylbenzoyl)-phenylphosphinoxid) und 1,1 g Irgacure® 184 (handelsüblicher Photoinitiator der Firma Ciba Speciality Chemicals; 1-Hydroxy-cyclohexyl-phenyl-keton) unter Rühren zugegeben. Ebenfalls unter Rühren werden 24,02 g Desmolux® XP 2609 (ungesättigtes, aliphatisches Polyurethanacrylat mit einem der Firma der Firma Bayer Material Science AG, 70% ig in Hexandiooldiacrylat (HDDA), Dichte 1.14g/cm³, Viskosität @23°C ~6.000 mPa*s), 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nanoresins AG) zugegeben. Nach 15min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen), die beide auf 100%ige Leistung gestellt werden, gehärtet. Die beschichtete Polycarbonat-Tafel wird mit einer Dosis von 2500 bis 3000 mJ/cm² gehärtet.

### Beispiele 2 und 3 sowie Vergleichsbeispiele V 1 bis V3: Herstellung der erfindungsgemäßen Beschichtungen B2 und B3 sowie der Beschichtungen der Vergleichsbeispiele VB1 bis VB3

Die erfindungsgemäßen Beschichtungen B2 und B3 sowie die Beschichtungen der Vergleichsbeispiele VB1 bis VB3 werden nach der gleichen Vorgehensweise, wie für die Beschichtung B1 beschrieben, hergestellt. Dabei bleiben die Anteile an Photonitiator-, Verlaufsadditiv sowie Silica in den Beschichtungsmitteln konstant. Die Bestandteile sind der Tabelle 1 zu entnehmen. Bis auf Vergleichsbeispiel VB3 sind alle Lacke klar und wiesen keinerlei Trübung auf. Die Trübung und Ausflockung mit Viskositätsanstieg bei Vergleichsbeispiel VB3 ist auf eine Unverträglichkeit des sterisch gehinderten Amins mit den Nanopartikeln zurückzuführen. Aufgrund der Ausflockung und des Viskositätsanstiegs bei Vergleichsbeispiels VB3 wurden für dieses Beschichtungsmittel keine weiteren Untersuchungen durchgeführt.

**Tabelle 1: Zusammensetzung der Beschichtungsmittel der Beispiele 1 bis 3 und der Vergleichsbeispiele V1 bis V3 in Gramm**

| | Beisp. 1 | Beisp. 2 | Beisp. 3 | V.-b. V1 | V.-b. V2 | V.-b. V3 |
|---|---|---|---|---|---|---|
| HALS L1-1 | 5,60 | | 5,67³ | | | |
| Tin. 152 | | 1,37 | | 1,37 | 1,37 | |
| ADK STAB LA-87 ⁵⁾ | | | | | | 1,37 |
| UV-Abs. L2-1 | | 6,89² | 6,20⁴ | | | |
| Tinuvin® 400 ¹⁾ | 1,61 | | | 1,61 | | 1,37 |
| Tinuvin® R796 ⁶⁾ | | | | | 1,37 | |
| Desmolux® XP2609 | 24,02 | 23,46 | 22,30 | 25,49 | 25,49 | 25,49 |
| n-BuOH | 2,3 | 2,3 | 0,4 | 2,3 | 2,5 | 2,5 |
| Isoprop. | 13,31 | 12,81 | 14,16 | 16,06 | 16,0 | 16,0 |
| EtOH | 11,40 | 11,40 | 9,50 | 11,40 | 11,5 | 11,5 |
| Irgacure®. 819 | 0,27 | 0,27 | 0,27 | 0,27 | 0,27 | 0,27 |
| Irgacure® 184 | 1,1 | 1,1 | 1,1 | 1,1 | 1,1 | 1,1 |
| Byk UV 3570 | 0,4 | 0,4 | 0,4 | 0,4 | 0,4 | 0,4 |
| Nanopol® C784 (50%ig in Butylacetat) | 40,0 | 40,0 | 40,0 | 40,0 | 40,0 | 40,0 |

| | | | | | | |
|---|---|---|---|---|---|---|
| Erläuterungen zu Tabelle 1: ¹⁾ 85%ig In 1-Methoxy-2-Propanol ²⁾ UV-Abs. L2-1 49,3%ig in Methylethylketon ³⁾ HALS L1-1 49,9 %ig in Methylethylketon ⁴⁾ UV-Abs L2-1 49,7%ig in Methylethylketon ⁵⁾ Bei ADK STAB LA-87 handelt es sich um ein kommerziell erhältliches, sterisch gehindertes Amin mir einer Acrylat-Funktion (2,2,6,6,-Tetramethyl-4-piperydilmethacrylat) der Firma Adeka Palmarole ⁶⁾ Bei Tinuvin® R796 handelt es sich um einen kommerziell erhältlichen UV-Absorber mit einer UV-reaktiven Acrylat-Funktion (2-(2'-Hydroxy-5'methacryloxyethylphenyl)-2H-benzotriazol. | | | | | | |

### Test der Haftung:

Zur Überprüfung der Haftung werden an den Beschichtungen der Beispiele 1 bis 3 und der Vergleichsbeispiele V1 bis V2 folgende Tests vollzogen:
Haftungstest mittels Klebebandabriss (ASTM D 3359 und ISO 2409),
Kochtest: Ein mit VE-Wasser gefülltes Bad wird zum kochen gebracht. Die präparierten Substrate werden dann in das kochende Wasser für 4 Stunden getaucht. Nach 4 Stunden werden sie aus dem Wasser genommen und kurz zum kühlen abgelegt. Danach wird ein Gitterschnitt geritzt und die Haftung mit Tesa-Abriss getestet. Wurde die Haftung bestanden (d.h. GT < 2), kann der Lack in den Wasserlagerungstest (Wasserlagerung gemäß ASTM 870-02 und ISO 2812-2)

**Tabelle 2: Prüfergebnisse des Haftungstests ohne Vorbehandlung mit UV für die Beschichtungen der Beispiele 1 bis 3 und der Vergleichsbeispiele V1 bis V2**

| Beispiel | Haftung GT | Kochtest GT | Kochtest Oberfläche |
|---|---|---|---|
| 1 | 0 | 3 | leicht trüb |
| 2 | 0 | 4 | leicht trüb |
| 3 | 0 | 0 | klar |
| V1 | 0 | 5 | trüb |
| V2 | 0 | 4 | leicht trüb |

**Tabelle 3: Prüfergebnisse des Haftungstests nach Vorbehandlung mit UV für die Beschichtungen der Beispiele 1 bis 3 und der Vergleichsbeispiele V1 bis V2**

| Beispiel | Haftung GT | Wasserl. GT Tag 11 | Wasserl. Oberfläche | Kochtest GT | Kochtest Oberfläche |
|---|---|---|---|---|---|
| 1 | 0 | 0 | leicht trüb | 0 | leicht trüb |
| 2 | 0 | 0 | leicht trüb | 0 | leicht trüb |
| 3 | 0 | 0 | klar | 0 | klar |
| V1 | 0 | 0 | trüb | 0 | trüb |
| V2 | 0 | 0 | leicht trüb | 0 | leicht trüb |

### Diskussion der Prüfergebnisse der Haftungstests:

Aus den Ergebnissen der Haftungstests wird deutlich, dass die kovalente Anbindung der Lichtschutzmittel an die Bindemittelmatrix sowohl für eine deutliche Haftungsverbesserung im Kochtest ohne Vorbehandlung sorgt als auch das Erscheinungsbild der Oberfläche nach solchen Tests verbessert. Des weiterem kann bei einer vollständigen Einbettung der Lichtschutzmittel wie in Beispiel 3 in die Lackmatrix auf oxidativ wirkende Verfahren, wie zum Beispiel Vorbehandlung mit UV-Licht, verzichtet werden.

### Test der Bewitterungsbeständigkeit

Prüfung der Bewitterungsbeständigkeit verschiedener Klarlacke im Kurzbewitterungstest PV3930 entsprechend der Spezifikation VW PV-3920 Nov03. Nach je 1000 h Stunden Schnellbewitterung wird der Haze-Wert nach der Norm ASTM D1003 sowie der Gelbwert nach der Norm ASTM E 313 bestimmt. Als Abbruchkriterium gilt das Erscheinen von Rissen innerhalb der Lackschicht.

**Tabelle 4: Verlauf des Hazewertes in % während der Schnellbewitterung PV3930, jeweils gemessen vor der Bewitterung ("0h") und nach 1000h, 2000h, 3000h und 4000h**

| Beispiel | Haze % | Haze % | Haze % | Haze % | Haze % |
|---|---|---|---|---|---|
| | 0h | 1000h | 2000h | 3000h | 4000h |
| 1 | 0,7 | 1,3 | 1,5 | 1,8 | 2,1 |
| 2 | 0,6 | 1,1 | 1,5 | 1,9 | 2,2 |
| 3 | 0,6 | 1,3 | 1,4 | 2,0 | 2,4 |
| V1 | 0,8 | 1,5 | 2,0 | 2,6 | 2,7 |
| V2 | 1,1 | 1,8 | 2,0 | 2,4 | 2,9 |

**Tabelle 5: Verlauf des Gelbwertes Yi (CIE D65) während der Schnellbewitterung PV3930, jeweils gemessen vor der Bewitterung ("0h") und nach 1000h, 2000h, 3000h und 4000h**

| Beispiel | Yi | Yi | Yi | Yi | Yi |
|---|---|---|---|---|---|
| | (CIED65) | (CIED65) | (CIED65) | (CIED65) | (CIED65) |
| | 0h | 1000h | 2000h | 3000h | 4000h |
| 1 | 1,3 | 0,8 | 1,2 | 1,0 | 1,4 |
| 2 | 2,2 | 1,7 | 1,8 | 2,1 | 2,3 |
| 3 | 1,4 | 0,8 | 0,8 | 1,0 | 1,2 |
| V1 | 3,0 | 2,0 | 2,4 | 2,4 | 2,3 |
| V2 | 3,3 | 2,4 | 2,4 | 2,8 | 2,7 |

### Diskussion der Prüfergebnisse des Bewitterungstests:

Nach 5000 h Stunden Bewitterung PV3930 sind bei keinem der Decklacke Risse erkennbar. Wie an den Ergebnissen aus der Tabelle 4 und 5 hervorgeht, ist überraschenderweise der Haze- und Gelbwert der unbelasteten Beschichtungen, die die modifizierten Lichtschutzmittel enthalten, niedriger als der der unbelasteten Beschichtungen, die die unmodifizierten handelsüblichen Lichtschutzmittel enthalten. Bei der Bewitterung sind durch die Fixierung keine Nachteile erkennbar.

### Beispiel 4: Herstellung der erfindungsgemäßen Beschichtung B4

In einem braunen Standglas werden 3,25 g n-Butanol, 11,4 g Isopropanol, 6,80 g Ethanol, 2,80 g Ethylacetat, 5,47 g sterisch gehindertes Amin L1-1 (51,6% ig in MEK) und 6,18 g UV-Absorber L2-1 (49,8% ig in MEK) gemischt. Anschließend werden 0,27 g Irgacure® 819 und 1,09 g Irgacure® 184 unter Rühren zugegeben. Ebenfalls unter Rühren werden 9,74 g Desmolux® VPLS 2308 (ungesättigtes, aliphatisches Polyurethan Acrylat 80%ig in in Hexandiooldiacrylat (HDDA), Dichte 1.11g/cm³, Viskosität@23°C ~29.000 mPa*s), 7,3 g SR 351 (handelsübliches Trimethylolpropantriacrylat der Firma Sartomer), 5,3 g Ebercryl® 1290 (aliphatisches Polyurethanacrylat der Firma Cytec,100% ig, Funktionalität theoretisch 6, Molekulargewicht theoretisch 1000, Dichte 1.19g/cm³, Viskosität@60°C ~2.000 mPa*s ), 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nanoresins AG) zugegeben. Nach 15min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen) die beide auf 100%ige Leistung gestellt werden, gehärtet. Die beschichtete Polycarbonat-Tafel wird mit einer Dosis von 2500 bis 3000 mJ/cm² gehärtet.

### Beispiel 5: Herstellung der erfindungsgemäßen Beschichtung B5

In einem braunen Standglas werden 3,00 g n-Butanol, 10,55 g Isopropanol, 6,30 g Ethanol, 2,64 Ethylacetat, 8,39 g sterisch gehindertes Amin L 1-2 (50,3% ig in Methylethylketon) und 8,1 g UV-Absorber L 2-2 (58,7% ig in Methylethylketon) gemischt. Anschließend werden 0,270 g Irgacure® 819 und 1,09 g Irgacure® 184 unter Rühren zugegeben. Ebenfalls unter Rühren werden 8,4 g Desmolux® VPLS 2308 (ungesättigtes, aliphatisches Polyurethan Acrylat 80%ig in in Hexandiooldiacrylat (HDDA), Dichte 1.11g/cm³, Viskosität@23°C ~29.000 mPa*s 7,3 g SR 351 (Trimethylolpropantriacrylat der Firma Sartomer®), 5,3 g Ebercryl® 1290 (aliphatisches Polyurethanacrylat der Firma Cytec, 100% ig, Funktionalität theoretisch 6, Molekulargewicht theoretisch 1000, Dichte 1.19g/cm³, Viskosität@60°C ~2.000 mPa*s ), 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nanoresins AG) zugegeben. Nach 15min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen) die beide auf 100%ige Leistung gestellt werden, gehärtet. Die beschichtete Polycarbonat-Tafel wird mit einer Dosis von 2500 bis 3000 mJ/cm² gehärtet.

### Beispiel 6: Herstellung der erfindungsgemäßen Beschichtung B6

In einem braunen Standglas werden 3,57 g n-Butanol, 12,50 g Isopropanol, 7,5 g Ethanol, 3,11 g Ethylacetat, 6,81 g sterisch gehindertes Amin L1-3 und 1,36 g Tinuvin® R796. Anschließend werden 0,270 g Irgacure® 819 und 1,09 g Irgacure® 184 unter Rühren zugegeben. Ebenfalls unter Rühren werden 10,21 g Desmolux® VPLS 2308 (ungesättigtes, aliphatisches Polyurethan Acrylat 80%ig in in Hexandiooldiacrylat (HDDA), Dichte 1.11g/cm³, Viskosität@23°C ~29.000 mPa*s), 7,66 g SR 351 (Trimethylolpropantriacrylat der Firma Sartomer®), 5,52 g Ebercryl 1290 (aliphatisches Polyurethanacrylat der Firma Cytec, 100% ig, Funktionalität theoretisch 6, Molekulargewicht theoretisch 1000, Dichte 1.19g/cm³, Viskosität@60°C ~2.000 mPa*s ), 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nanoresins AG) zugegeben. Nach 15min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen) die beide auf 100%ige Leistung gestellt werden, gehärtet. Die beschichtete Polycarbonat-Tafel wird mit einer Dosis von 2500 bis 3000 mJ/cm² gehärtet.

### Weitere Applikationsarten

Bei der Tauchapplikation wird vorzugsweise ein Festkörpergehalt von 50 Gew.-% eingestellt. Als Lösemittelkombination wird vorzugsweise eine Mischung aus n-Butanol, Ethanol, Ethylacetat, Isopropanol und Solventnaphta eingesetzt. Nach einer Eintauchzeit von beispielsweise 5 Sekunden, einer Abtropfzeit von etwa 1 Minute und einer Ablüftzeit bei etwa 80 °C von ungefähr 5 Minuten, wird mittels einer IST Lignocure-Anlage (Dosis 1,8 J/cm², Intensität 0,3 W/cm²) die Härtung zu Beschichtungen einer Schichtdicke von 9 bis 14 µm durchgeführt.

Bei der Applikation durch Fluten wird vorzugsweise ein Festkörpergehalt von 50 Gew.-% eingestellt. Als Lösemittelkombination wird vorzugsweise eine Mischung aus n-Butanol, Ethanol, Ethylacetat, Isopropanol und Solventnaphta eingesetzt. Nach einer Abtropfzeit von etwa 1 Minute und einer Ablüftzeit bei etwa 80 °C von ungefähr 5 Minuten, wird mittels einer IST Lignocure-Anlage (Dosis 1,8 J/cm², Intensität 0,3 W/cm²) die Härtung zu Beschichtungen einer Schichtdicke von 9 bis 12 µm durchgeführt.

Bei der Applikation durch Spritzen (Düse: 1,3 mm, Luftdruck 4 bar, Spritzabstand 20 cm) wird vorzugsweise ein Festkörpergehalt von 40 Gew.-% eingestellt. Als Lösemittelkombination wird vorzugsweise eine Mischung aus Ethylacetat, Butylacetat und Isopropanol eingesetzt. Nach einer Ablüftzeit bei etwa 80 °C von ungefähr 5 Minuten, wird mittels einer IST Lignocure-Anlage (Dosis 3,9 J/cm², Intensität 1,4 W/cm²) die Härtung zu Beschichtungen einer Schichtdicke von etwa 7 µm durchgeführt.

### Test der Abrasionsbeständigkeit

Die Abrasionsbeständigkeit der Oberflächen wurde mit Hilfe des Taber-Tests untersucht. Der Taber-Test und die anschließende Haze Messung wurde in Anlehnung an ASTM D 1044-05 und ASTM D 1003-00 durchgeführt, wobei die Proben vor der Messung nicht im Normklima bei 23°C und 50% relativer Luftfeuchte gelagert wurden.

**Tabelle 6: Ergebnisse aus den Prüfung der Beispiele 4 bis 6**

| Beisp. | Ausgangs-Haze in % | Haze nach Taber in % | Haze nach 100 D.hüben in % | Ausgangs-Yi (CIED65) | Auftreten von Rissen nach CAM 180 | Auftreten von Rissen nach PV3930 |
|---|---|---|---|---|---|---|
| 4 | 0,3 | 8,1 | 3,1 | 0,78 | 5000 h | 5500 h |
| 5 | 0,3 | 8,0 | 2,7 | 1,35 | 5000 h | 5500 h |
| 6 | 0,5 | 11,4 | 2,8 | 1,24 | 3000 h | 3750 h |

### Erläuterungen zu Tabelle 6:

Die Ergebnisse aus Tabelle 6 zeigen, dass die Beschichtungen der Beispiele 4 und 5, bei denen die Beschichtungsmittel ausschließlich die erfindungsgemäßen Lichtschutzmittel enthalten, eine bessere Bewitterungsstabilität aufweisen als das Beschichtungsmittel des Beispiels 6, das eine Mischung aus einem kommerziell erhältlichen ungesättigten Produkt (L3) und einem erfindungsgemäßen Lichtschutzmittel enthält.

### Herstellung eines ungesättigten UV-Absorbers auf Basis 2-[4-[(2-Hydroxy)-3-dodecyloxypropyl]oxy]-2-hydroxyphenyl]-4,6-bis-(2,4)-dimethylphenyl-1,3,5-triazin (UV Absorber L2-3)

In einem 250 mL Rundkolben werden 26,4 g Desmodur® N3600 (handelsübliches, trimertisiertes Hexamethylendiisocyanat mit einem NCO-Gehalt von 23,0 % der Firma Bayer Material Science AG) und 1,3 g DBTL (Dibutylzinnlaurat) in 45,60 g MEK (Methylethylketon) vorgelegt. Bei Raumtemperatur wird nun 59,10 g einer 50,2%igen Mischung aus 2-[4-[(2-Hydroxy)-3-dodecyloxypropyl]oxy]-2-hydroxyphenyl]-4,6-bis-(2,4)-dimethyl-phenyl-1,3,5-triazin und 2-[4-[(2-Hydroxy)-3-tridecyloxypropyl]oxy]-2-hydroxyphenyl]-4,6-bis-(2,4)-dimethylphenyl-1,3,5-triazin in Methylethylketon über einen Tropftrichter mit Druckausgleich zugetropft. Nach vollständiger Zugabe wird das Reaktionsgemisch auf 70 °C erwärmt und solange bei dieser Temperatur gehalten bis 1/3 aller NCO-Funktionen umgesetzt worden sind.
Anschließend werden bei 71 °C 3,77 g HEA ((2-Hydrox)ethylacrylat) sowie 9,65 g SR444 D (handelsübliches Pentaerythritoltriacrylat der Firma Sartomer) zu der Reaktionslösung gegeben und auf Raumtemperatur abgekühlt, sobald ein NCO-Gehalt von 0.00 % vorliegt. Abschließend mit 0,05 % Methylhydrochinon versetzt, abgelassen und der Festkörper nach DIN EN ISO 3251 bestimmt.
FK 130°C: 69,7 %
Doppelbindungsgehalt (¹H-NMR): 8,6 g/100g

### Herstellung eines ungesättigten UV-Absorbers auf Basis 2-[4-[(2-Hydroxy)-3-dodecyloxypropyl]oxy]-2-hydroxyphenyl]-4,6-bis-(2,4)-dimethylphenyl-1,3,5-triazin (UV Absorber L2-4)

In einem 250 mL Rundkolben werden 23,85 g Desmodur® N3600 (handelsübliches, trimertisiertes Hexamethylendiisocyanat mit einem NCO-Gehalt von 23,0 % der Firma Bayer Material Science AG) und 1,28 g DBTL (Dibutylzinnlaurat) in 48,60 g MEK (Methylethylketon) vorgelegt. Bei Raumtemperatur wird nun 52,95 g einer 50,2%igen Mischung aus 2-[4-[(2-Hydroxy)-3-dodecyloxypropyl]oxy]-2-hydroxyphenyl]-4,6-bis-(2,4)-dimethyl-phenyl-1,3,5-triazin und 2-[4-[(2-Hydroxy)-3-tridecyloxypropyl]oxy]-2-hydroxyphenyl]-4,6-bis-(2,4)-dimethylphenyl-1,3,5-triazin in Methylethylketon über einen Tropftrichter mit Druckausgleich zugetropft. Nach vollständiger Zugabe wird das Reaktionsgemisch auf 70 °C erwärmt und solange bei dieser Temperatur gehalten bis 1/3 aller NCO-Funktionen umgesetzt worden sind.
Anschließend werden 17,28 g SR444 D (handelsübliches Pentaerythritoltriacrylat der Firma Sartomer) zu der Reaktionslösung gegeben und auf Raumtemperatur abgekühlt, sobald ein NCO-Gehalt von 0.00 % vorliegt. Abschließend mit 0,05 % Methylhydrochinon versetzt, abgelassen und der Festkörper nach DIN EN ISO 3251 bestimmt.
FK 130°C: 59,8 %
Doppelbindungsgehalt (¹H-NMR): 8,9 g/100g

### Beispiel 7: Herstellung der erfindungsgemäßen Beschichtung B7

In einem braunen Standglas werden 3,00 g n-Butanol, 12,14 g Isopropanol, 9,03 g Ethanol, 0,19 g Methylethylketon und 11,80 g UV-Absorber L2-1 (52,2%ig in Methylethylketon) gemischt. Anschließend werden 0,28 g Irgacure® 819 (handelsüblicher Photoinitiator der Firma Ciba Speciality Chemicals; Bis(2,4,6-trimethylbenzoyl)-phenylphosphinoxid) und 1,09 g Irgacure® 184 (handelsüblicher Photoinitiator der Firma Ciba Speciality Chemicals; 1-Hydroxy-cyclohexyl-phenyl-keton) unter Rühren zugegeben. Ebenfalls unter Rühren werden 22,07 g Ebercryl 1290 (ungesättigtes, aliphatisches Polyurethanacrylat der Firma UCB Chemicals Corp. , 100% ig, Funktionalität theoretisch 6, Molekulargewicht theoretisch 1000, Dichte 1.19g/cm³, Viskosität@60°C ~2.000 mPa*s, 0,4 g Byk UV 3570 (handelsübliches Verlaufsadditiv der Firma Byk-Chemie GmbH, Lösung eines polyestermodifizierten acrylfunktionellen Polydimethylsiloxans) und 40,0 g Nanopol® C 784 (handelsübliches SiO2, durchschnittlicher Teilchendurchmesser von 20 nm, 50%ig in Butylacetat, erhältlich von Nanoresins AG) zugegeben. Nach 15min wird die Zusammensetzung mit einem 36 µm-Stabrakel auf eine Polycarbonat-Tafel appliziert. Diese wird für 5 min bei 80 °C zum Ablüften in den Ofen gelegt und anschließend mit UV-Licht an einer IST-Lignocure-Anlage, ausgestattet mit zwei UV-Lampen (Quecksilber-Lampen) die beide auf 100%ige Leistung gestellt werden, gehärtet. Die beschichtete Polycarbonat-Tafel wird mit einer Dosis von 2500 bis 3000 mJ/cm² gehärtet.

### Beispiele 8 bis 10 sowie Vergleichsbeispiele V4 und V5: Herstellung der erfindungsgemäßen Beschichtungen B7 bis B10 sowie der Beschichtungen der Vergleichsbeispiele VB4 und VB5

Analog zu Beispiel 7 werden die weiteren erfindungsgemäßen Beschichtungen B8 bis B10 und die Beschichtungen VB4 und VB5 der Vergleichsbeispiele V4 und V5 formuliert. Dabei werden immer 6 % UV-Absorber bezogen auf den Bindemittel- plus Nanopartikelgehalt eingesetzt. Bei der Applikation wird vorzugsweise ein Festkörpergehalt von 50 Gew.-% eingestellt. Als Lösemittelkombination wird eine Mischung aus n-Butanol, Ethanol, Butylacetat und Isopropanol eingesetzt. Die Zusammensetzung der Beschichtungsmittel der Beispiele 7 bis 10 ist in Tabelle 7 aufgeführt.

Nach einer Abtropfzeit von etwa 1 Minute und einer Ablüftzeit bei etwa 80 °C von ungefähr 5 Minuten, wird mittels einer IST Lignocure-Anlage (Dosis 1,8 J/cm², Intensität 0,3 W/cm²) die Härtung zu Beschichtungen einer Schichtdicke von 9 bis 12 µm durchgeführt.

**Tabelle 7: Zusammensetzung der Beschichtungsmittel der Beispiele 7 bis 12 und der Vergleichsbeispiele V4 und V5 in Gramm**

| | Bsp. 7 | Bsp. 8 | Bsp. 9 | Bp. 10 | V.4 | V.5 |
|---|---|---|---|---|---|---|
| UV-A. L2-1¹ | 11,8 | | | | | |
| UV-A. L2-3² | | 9,18 | | | | |
| UV-A. L2-4³ | | | 10,70 | | | |
| UV-A. L2-2⁴ | | | | 12,49 | | |
| Tinuvin® 400⁵ | | | | | 3,21 | |
| Ebercryl 1290® | 22,07 | 21,83 | 21,84 | 19,10 | 25,50 | 28,24 |
| n-BuOH | 3,00 | 3,00 | 3,0 | 3,0 | 3,00 | 3,00 |
| Isoprop. | 12,14 | 12,14 | 12,14 | 12,14 | 11,66 | 12,14 |
| EtOH | 9,03 | 9,03 | 9,03 | 9,03 | 9,03 | 9,03 |
| MEK | 0,19 | 3,05 | 1,53 | 2,47 | 5,83 | 5,83 |
| Irgacure®. 819 | 0,28 | 0,28 | 0,28 | 0,28 | 0,27 | 0,27 |
| Irgacure® 184 | 1,09 | 1,09 | 1,09 | 1,09 | 1,1 | 1,1 |
| Byk UV 3570 | 0,4 | 0,4 | 0,4 | 0,4 | 0,4 | 0,4 |
| Nanopol® C784⁶ | 40,0 | 40,0 | 40,0 | 40,0 | 40,0 | 40,0 |

| | | | | | | |
|---|---|---|---|---|---|---|
| Erläuterungen zu Tabelle 7: ¹⁾ Oben beschriebenes Lichtschutzmittel UV-Absorber L2-1, 52,2%ig in Methylethylketon ²⁾ Oben beschriebenes Lichtschutzmittel UV-Absorber L2-3, 69,7%ig in Methylethylketon ³⁾ Oben beschriebenes Lichtschutzmittel UV-Absorber L2-4, 59,8%ig in Methylethylketon ⁴⁾ Oben beschriebenes Lichtschutzmittel UV-Absorber L2-2, 73,1 %ig in Methylethylketon ⁵⁾ 85%ig in 1-Methoxy-2-Propanol ⁶⁾ 50%ig in Butylacetat | | | | | | |

### Test der Kratzbeständigkeit

Die Kratzbeständigkeit wird in Anlehnung an den Crockmeter-Test geprüft. Als Prüfmaterial wird Schleifvlies der Firma Falconbrite (TypFG Gold). Das Auflagegewicht beträgt 1 Kg. Nach 100 Doppelhüben wird der Haze-Wert (ASTM D1003) zur Bestimmung des Schädigungsgrades gemessen.

**Tabelle 8: Kratzbeständigkeit der Beschichtungen der erfindungsgemäßen Beispiele 7 bis 10 und der Vergleichsbeispiele V4 und V5**

| Beispiel | Haze nach 100 DH [%], Auflagegewicht 1 Kg |
|---|---|
| 7 | 2,1 |
| 8 | 1,8 |
| 9 | 1,6 |
| 10 | 1,5 |
| V4 | 2,0 |
| V5 | 1,2 |

Die Ergebnisse aus Tabelle 8 zeigen, dass mit der Erhöhung der Doppelbindungsdichte des eingesetzten vernetzbaren UV-Absorbers die Kratzbeständigkeit zunimmt.

## Patentansprüche

1. Verfahren zur Beschichtung von Polycarbonatsubstraten, bei dem ein transparentes Beschichtungsmittel umfassend mindestens ein strahlungshärtendes Bindemittel (A) und/oder Reaktiwerdünner (C), Nanopartikel (B), und mindestens ein Lichtschutzmittel (L), auf ein Polycarbonatsubstrat appliziert wird, **dadurch gekennzeichnet, dass** das Beschichtungsmittel mindestens ein Lichtschutzmittel (L) enthält, welches im Mittel mindestens eine über eine Urethangruppe gebundene ethylenisch ungesättigte Gruppe pro Molekül enthält.

2. Verfahren nach Anspruch 1, **dadurch gekennzeichnet, dass** das Beschichtungsmittel mindestens ein Lichtschutzmittel (L) enthält, welches im Mittel pro Molekül mindestens eine über eine Urethangruppe gebundene Acrylat- oder Methacrylatgruppe oder über Urethangruppen gebundene Acrylat- und Methacrylatgruppen enthält.

3. Verfahren nach Anspruch 1 oder 2, **dadurch gekennzeichnet, dass** das Beschichtungsmittel als Lichtschutzmittel (L) eine Mischung aus einem Lichtschutzmittel (L1) auf Basis eines sterisch gehinderten Amins und einem Lichtschutzmittel (L2) auf Basis eines UV-Absorbers enthält, wobei entweder
(iv) das Lichtschutzmittel (L1) oder
(v) das Lichtschutzmittel (L2) oder
(vi) das Lichtschutzmittel (L1) und das Lichtschutzmittel (L2) im Mittel pro Molekül mindestens eine über Urethangruppen gebundene ethylenisch ungesättigte Gruppe, enthalten.

4. Verfahren nach Anspruch 2 oder 3, **dadurch gekennzeichnet, dass** das Lichtschutzmittel (L) oder das Lichtschutzmittel (L1) oder das Lichtschutzmittel (L2) oder sowohl das Lichtschutzmittel (L1) als auch das Lichtschutzmittel (L2) 1,0 bis 20,0 g jeweils über Urethangruppen gebundene Acrylat- oder Methacrylat- oder Acrylat- und Methacrylatgruppen pro 100 g Lichtschutzmittel, aufweist.

5. Verfahren nach einem der Ansprüche 1 bis 4, **dadurch gekennzeichnet, dass** die Acrylat- oder die Methacrylat- oder die Acrylat- und Methacrylatgruppen dadurch in das Lichtschutzmittel (L) bzw. (L1) bzw. (L2) eingeführt worden sind, dass
(i) ein Lichtschutzmittel-(L") mit mindestens einer gegenüber Iso-cyanatgruppen reaktiven Gruppe (LG) oder ein Lichtschutzmittel (L1") auf Basis eines sterisch gehinderten Amins mit mindestens einer gegenüber Isocyanatgruppen reaktiven Gruppe (LG) oder ein Lichtschutzmittel (L2") auf Basis eines UV-Absorbers mit mindestens einer gegenüber Isocyanatgruppen reaktiven Gruppe (LG) oder eine Mischung aus einem Lichtschutzmittel (L1") mit mindestens einer gegenüber Isocyanatgruppen reaktiven Gruppe (LG) und einem Lichtschutzmittel (L2") mit mindestens einer gegenüber Isocyanatgruppen reaktiven Gruppe (LG) mit einer gesättigten isocyanatgruppenhaltigen Verbindung (V) und/oder einer ungesättigten isocyanatgruppenhaltigen Verbindung (V') umgesetzt worden ist, und
(ii) das in Stufe (i) erhaltene isocyanatgruppenhaltige Lichtschutzmittel (L') bzw. (L1') bzw. (L2') mit einem Hydroxyalkylester der Acrylsäure oder mit einem Hydroxyalkylester der Methacrylsäure oder einer Mischung aus einem Hydroxyalkylester der Acrylsäure und einem Hydroxyalkylester der Methacrylsäure umgesetzt worden ist.

6. Verfahren nach Anspruch 5, **dadurch gekennzeichnet, dass** die isocyanatgruppenhaltige Verbindung (V) im Mittel mindestens 2 Isocyanatgruppen pro Molekül enthält und/oder die isocyanatgruppenhaltige Verbindung (V) ausgewählt ist aus der Gruppe der aliphatischen und/oder cycloaliphatischen Diisocyanate und deren Allophanate, Biurete, Uretdione und Isocyanurate.

7. Verfahren nach Anspruch 5 oder 6, **dadurch gekennzeichnet, dass** die isocyanatgruppenhaltige Verbindung (V') im Mittel mindestens 1 ethylenisch ungesättigte Doppelbindung pro Molekül enthält und/oder die isocyanatgruppenhaltige Verbindung (V') ausgewählt ist aus der Gruppe der Urethanacrylate und/oder Urethanmethacrylate.

8. Verfahren nach einem der Ansprüche 5 bis 7, **dadurch gekennzeichnet, dass**
das in Stufe (i) erhaltene isocyanatgruppenhaltige Lichtschutzmittel (L') bzw. (L1') bzw. (L2') in Stufe (ii) mit Hydroxyethylacrylat, Hydroxyethylmethacrylat, Trimethylolpropandiacrylat, Trimethylolpropandimethacrylat, Pentaerythritdiacrylat, Pentaerythritdimethacrylat, Pentaerythrittriacrylat, Pentaerythrittrimethacrylat oder deren Mischungen umgesetzt wird
und/oder
das Lichtschutzmittel (L1") 2,4-bis[N-Butyl-N-(1-cyclohexyloxy-2,2,6,6-tetramethylpiperidin-4-yl)amino]-6-(2-hydroxyethylamin)-1,3,5-triazin und/oder das Lichtschutzmittel (L2") eine Mischung aus 2-[4-[(2-Hydroxy)-3-dodecyloxypropyl]oxy]-2-hydroxyphenyl]-4,6-bis-(2,4)-dimethylphenyl-1,3,5-triazin und 2-[4-[(2-Hydroxy)-3-tridecyloxypropyl)oxy]-2-hydroxyphenyl]-4,6-bis-(2,4)-dimethylphenyl-1,3,5-triazin ist.

9. Verfahren nach einem der Ansprüche 1 bis 8, **dadurch gekennzeichnet, dass** das Beschichtungsmittel 2,5 bis 60,0 Gew.-% des Lichtschutzmittels (L) oder das Beschichtungsmittel 2,5 bis 60,0 Gew.-% des Lichtschutzmittels (L1) und/oder 2,5 bis 60,0 Gew.-% des Lichtschutzmittels (L2) enthält, wobei alle Gew.%-Angaben jeweils bezogen sind auf das Gewicht des Bindemittels (A) plus dem Gewicht der Nanopartikel (B) plus dem Gewicht des eingesetzten Reaktiwerdünners (C).

10. Verfahren nach einem der Ansprüche 1 bis 9, **dadurch gekennzeichnet, dass** das Beschichtungsmittel, jeweils bezogen auf das Gewicht des eingesetzten Bestandteils (A) plus dem Gewicht der Nanopartikel (B) plus dem Gewicht des eingesetzten Reaktiwerdünners (C):
(A) 0 bis 95 Gew.-% mindestens eines strahlungshärtenden Bindemittels (A),
(B) 5 bis 60 Gew.-% an Nanopartikeln (B) und
(C) 0 bis 95 Gew.-% mindestens eines gegenüber Polycarbonat inerten Reaktiwerdünners,
enthält, wobei sich das Gewicht des Bestandteils (A), der Nanopartikel (B) und
das Gewicht des Reaktivverdünners (C) immer zu 100% addieren.

11. Beschichtungsmittel enthaltend mindestens ein strahlungshärtendes Bindemittel (A) und/oder Reaktiwerdünner (C), Nanopartikel (B), ggf. Lösemittel und mindestens ein Lichtschutzmittel (L), **dadurch gekennzeichnet, dass** das Beschichtungsmittel mindestens ein Lichtschutzmittel (L) enthält, welches im Mittel pro Molekül mindestens eine über eine Urethangruppe gebundene ethylenisch ungesättigte Gruppe enthält.

12. Beschichtungsmittel nach Anspruch 11, **dadurch gekennzeichnet, dass** das Beschichtungsmittel als Lichtschutzmittel (L) eine Mischung aus einem Lichtschutzmittel (L1) auf Basis eines sterisch gehinderten Amins und einem Lichtschutzmittel (L2) auf Basis eines UV-Absorbers enthält, wobei entweder
(i) das Lichtschutzmittel (L1) oder
(ii) das Lichtschutzmittel (L2) oder
(iii) das Lichtschutzmittel (L1) und das Lichtschutzmittel (L2)
im Mittel pro Molekül mindestens eine über Urethangruppen gebundene ethylenisch ungesättigte Gruppe, bevorzugt mindestens eine über urethangruppen gebundene Acrylatgruppe oder Methacrylatgruppe oder sowohl Acrylat-als auch Methacrylatgruppen, enthalten.

13. Beschichtungsmittel nach Anspruch 12, **dadurch gekennzeichnet, dass** die Acrylat- oder die Methacrylat- oder die Acrylat- und Methacrylatgruppen dadurch in das Lichtschutzmittel eingeführt worden sind, dass
(i) ein Lichtschutzmittel (L") mit mindestens einer gegenüber Isocyanatgruppen reaktiven Gruppe (LG) oder ein Lichtschutzmittel (L1") mit mindestens einer gegenüber Isocyanatgruppen reaktiven Gruppe (LG) oder ein Lichtschutzmittel (L2") mit mindestens einer gegenüber Isocyanatgruppen reaktiven Gruppe (LG) oder eine Mischung aus einem Lichtschutzmittel (L1") mit mindestens einer gegenüber Isocyanatgruppen reaktiven Gruppe (LG) und einem Lichtschutzmittel (L2") mit mindestens einer gegenüber Isocyanatgruppen reaktiven Gruppe (LG) mit einer gesättigten isocyanatgruppenhaltigen Verbindung (V) und/oder einer ungesättigten isocyanatgruppenhaltigen Verbindung (V') umgesetzt worden ist, und
(ii) das in Stufe (i) erhaltene isocyanatgruppenhaltige Lichtschutzmittel (L') bzw. (L1') bzw. (L2') mit einem Hydroxyalkylester der Acrylsäure oder mit einem Hydroxyalkylester der Methacrylsäure oder einer Mischung aus einem Hydroxyalkylester der Acrylsäure und einem Hydroxyalkylester der Methacrylsäure umgesetzt worden ist.

14. Beschichtetes Polycarbonatsubstrat erhältlich durch ein Verfahren gemäß einem oder mehreren der Ansprüche 1 bis 10.

15. Beschichtetes Polycarbonatsubstrat gemäß Anspruch 14, wobei es sich um Platten, Fenster, Brillengläser, optische Linsen, Teile von Kraftfahrzeugen, Teile von Motorrädern, Bussen, LKW oder PKW oder Nutzfahrzeugen und/oder Flugzeugteile, Reflektoren, Straßenreflektoren, Abdeckungen, Teile von Lärmschutzwänden, Compact Discs, Digital Versatile Discs oder Digital Video Discs, Teile von Scheinwerfern und/oder Scheiben von Fahrzeugen handelt.

## Claims

1. Process for the coating of polycarbonate substrates, by applying a transparent coating composition encompassing at least one radiation-curing binder resin (A) and/or reactive diluent (C), nanoparticles (B), and at least one light stabilizer (L), to a polycarbonate substrate, **characterized in that** the coating composition comprises at least one light stabilizer (L) which comprises, per molecule, an average of at least one ethylenically unsaturated group bonded by way of a urethane group.

2. Process according to Claim 1, **characterized in that** the coating composition comprises at least one light stabilizer (L) which comprises, per molecule, an average of at least one acrylate or methacrylate group bonded by way of a urethane group or which comprises acrylate and methacrylate groups bonded by way of urethane groups.

3. Process according to Claim 1 or 2, **characterized in that** the coating composition comprises as light stabilizer (L) a mixture composed of a light stabilizer (L1) based on a sterically hindered amine and of a light stabilizer (L2) based on a UV absorber, where either
(iv) the light stabilizer (L1) or
(v) the light stabilizer (L2) or
(vi) the light stabilizer (L1) and the light stabilizer (L2)
contain(s), per molecule, an average of at least one ethylenically unsaturated group bonded by way of urethane groups.

4. Process according to Claim 2 or 3, **characterized in that** the light stabilizer (L) or the light stabilizer (L1) or the light stabilizer (L2) or both the light stabilizer (L1) and the light stabilizer (L2) has/have, per 100 g of light stabilizer, 1.0 to 20.0 g respectively of acrylate or methacrylate or acrylate and methacrylate groups bonded by way of urethane groups.

5. Process according to any of Claims 1 to 4, **characterized in that** the method by which the acrylate or methacrylate or acrylate and methacrylate groups were introduced into the light stabilizer (L) and, respectively, (L1) and, respectively, (L2) is that
(i) a light stabilizer (L") having at least one group (LG) reactive toward isocyanate groups or a light stabilizer (L1") based on a sterically hindered amine having at least one group (LG) reactive toward isocyanate groups or a light stabilizer (L2") based on a UV absorber having at least one group (LG) reactive toward isocyanate groups or a mixture composed of a light stabilizer (L1") having at least one group (LG) reactive toward isocyanate groups and of a light stabilizer (L2") having at least one group (LG) reactive toward isocyanate groups was reacted with a saturated compound (V) comprising isocyanate groups and/or with an unsaturated compound (V') comprising isocyanate groups, and
(ii) the light stabilizer (L') and, respectively, (L1') and, respectively, (L2') obtained in stage (i) and comprising isocyanate groups was reacted with a hydroxyalkyl ester of acrylic acid or with a hydroxyalkyl ester of methacrylic acid or with a mixture composed of a hydroxyalkyl ester of acrylic acid and of a hydroxyalkyl ester of methacrylic acid.

6. Process according to Claim 5, **characterized in that** the compound (V) comprising isocyanate groups comprises an average of at least 2 isocyanate groups per molecule and/or the compound (V) comprising isocyanate groups has been selected from the group of the aliphatic and/or cycloaliphatic diisocyanates and their allophanates, biurets, uretdiones and isocyanurates.

7. Process according to Claim 5 or 6, **characterized in that** the compound (V') comprising isocyanate groups comprises an average of at least 1 ethylenically unsaturated double bond per molecule and/or the compound (V') comprising isocyanate groups has been selected from the group of the urethane acrylates and/or urethane methacrylates.

8. Process according to any of Claims 5 to 7, **characterized in that**
the light stabilizer (L') and, respectively, (L1') and, respectively, (L2') comprising isocyanate groups and obtained in stage (i) is reacted in stage (ii) with hydroxyethyl acrylate, hydroxyethyl methacrylate, trimethylolpropane diacrylate, trimethylolpropane dimethacrylate, pentaerythritol diacrylate, pentaerythritol dimethacrylate, pentaerythritol triacrylate, pentaerythritol trimethacrylate or their mixtures
and/or
the light stabilizer (L1") is 2,4-bis[N-butyl-N-(1-cyclohexyloxy-2,2,6,6-tetramethylpiperidin-4-yl)amino]-6-(2-hydroxyethylamino)1,3,5-triazine and/or the light stabilizer (L2") is a mixture composed of 2-[4-[(2-hydroxy)-3-dodecyloxypropyl]oxy]-2-hydroxyphenyl]-4,6-bis(2,4)-dimethylphenyl)-1,3,5-triazine and 2-[4-[(2-hydroxy)-3-tridecyloxypropyl]oxy]-2-hydroxyphenyl]-4,6-bis(2,4)-dimethylphenyl)-1,3,5-triazine.

9. Process according to any of Claims 1 to 8, **characterized in that** the coating composition comprises 2.5 to 60.0% by weight of the light stabilizer (L) or the coating composition comprises 2.5 to 60.0% by weight of the light stabilizer (L1) and/or 2.5 to 60.0% by weight of the light stabilizer (L2), where all of the % by weight data are respectively based on the weight of the binder resin (A) plus the weight of the nanoparticles (B) plus the weight of the reactive diluent (C) used.

10. Process according to any of Claims 1 to 9, **characterized in that** the coating composition comprises, respectively based on the weight of the constituent (A) used plus the weight of the nanoparticles (B) plus the weight of the reactive diluent (C) used:
(A) 0 to 95% by weight of at least one radiation-curing binder resin (A),
(B) 5 to 60% by weight of nanoparticles (B), and
(C) 0 to 95% by weight of at least one reactive diluent inert toward polycarbonate,
where the weight of the constituent (A) and of the nanoparticles (B) and the weight of the reactive diluent (C) always give a total of 100%.

11. Coating composition comprising at least one radiation-curing binder resin (A) and/or reactive diluent (C), nanoparticles (B), optionally solvent and at least one light stabilizer (L), **characterized in that** the coating composition comprises at least one light stabilizer (L) which comprises, per molecule, an average of at least one ethylenically unsaturated group bonded by way of a urethane group.

12. Coating composition according to Claim 11, **characterized in that** the coating composition comprises as light stabilizer (L) a mixture composed of a light stabilizer (L1) based on a sterically hindered amine and of a light stabilizer (L2) based on a UV absorber, where either
(i) the light stabilizer (L1) or
(ii) the light stabilizer (L2) or
(iii) the light stabilizer (L1) and the light stabilizer (L2)
contain(s), per molecule, an average of at least one ethylenically unsaturated group bonded by way of urethane groups, preferably at least one acrylate group or methacrylate group bonded by way of urethane groups or which contain(s) not only acrylate but also methacrylate groups.

13. Coating composition according to Claim 12, **characterized in that** the method by which the acrylate or methacrylate or acrylate and methacrylate groups were introduced into the light stabilizer is that
(i) a light stabilizer (L") having at least one group (LG) reactive toward isocyanate groups or a light stabilizer (L1") having at least one group (LG) reactive toward isocyanate groups or a light stabilizer (L2") having at least one group (LG) reactive toward isocyanate groups or a mixture composed of a light stabilizer (L1") having at least one group (LG) reactive toward isocyanate groups and of a light stabilizer (L2") having at least one group (LG) reactive toward isocyanate groups was reacted with a saturated compound (V) comprising isocyanate groups and/or with an unsaturated compound (V') comprising isocyanate groups, and
(ii) the light stabilizer (L') and, respectively, (L1') and, respectively, (L2') obtained in stage (i) and comprising isocyanate groups was reacted with a hydroxyalkyl ester of acrylic acid or with a hydroxyalkyl ester of methacrylic acid or with a mixture composed of a hydroxyalkyl ester of acrylic acid and of a hydroxyalkyl ester of methacrylic acid.

14. Coated polycarbonate substrate obtainable via a process according to one or more of Claims 1 to 10.

15. Coated polycarbonate substrate according to Claim 14, which involves sheets, windows, spectacle lenses, optical lenses, parts of motor vehicles, parts of motorcycles, buses, trucks or cars or service vehicles, and/or aircraft parts, reflectors, road reflectors, protective coverings, parts of sound-deadening walls, compact discs, digital versatile discs or digital video discs, parts of headlamps and/or windshields of motor vehicles.

## Revendications

1. Procédé pour le revêtement de substrats en polycarbonate, dans lequel un agent de revêtement transparent, comprenant au moins un liant (A) durcissant sous l'effet d'un rayonnement et/ou des diluants réactifs (C), des nanoparticules (B) et au moins un agent de protection contre la lumière (L), est appliqué sur un substrat en polycarbonate, **caractérisé en ce que** l'agent de revêtement contient au moins un agent de protection contre la lumière (L), qui contient en moyenne, par molécule, au moins un groupe éthyléniquement insaturé lié via un groupe uréthane.

2. Procédé selon la revendication 1, **caractérisé en ce que** l'agent de revêtement contient au moins un agent de protection contre la lumière (L), qui contient en moyenne, par molécule, au moins un groupe acrylate ou méthacrylate lié via un groupe uréthane ou des groupes acrylate et méthacrylate liés via des groupes uréthane.

3. Procédé selon la revendication 1 ou 2, **caractérisé en ce que** l'agent de revêtement contient, comme agent de protection contre la lumière (L), un mélange d'un agent de protection contre la lumière (L1) à base d'une amine stériquement encombrée et d'un agent de protection contre la lumière (L2) à base d'un absorbant des UV, où soit (iv) l'agent de protection contre la lumière (L1), soit
(v) l'agent de protection contre la lumière (L2), soit
(vi) l'agent de protection contre la lumière (L1) et l'agent de protection contre la lumière (L2) contien(nen)t en moyenne, par molécule, au moins un groupe éthyléniquement insaturé lié via des groupes uréthane.

4. Procédé selon la revendication 2 ou 3, **caractérisé en ce que** l'agent de protection contre la lumière (L) ou l'agent de protection contre la lumière (L1) ou l'agent de protection contre la lumière (L2) ou tant l'agent de protection contre la lumière (L1) que l'agent de protection contre la lumière (L2) présent(ent) 1,0 à 20,0 g de groupes acrylate ou de groupes méthacrylate ou de groupes acrylate et méthacrylate à chaque fois liés via des groupes uréthane par 100 g d'agent de protection contre la lumière.

5. Procédé selon l'une quelconque des revendications 1 à 4, **caractérisé en ce que** les groupes acrylate ou les groupes méthacrylate ou les groupes acrylate et les groupes méthacrylate ont été introduits dans l'agent de protection contre la lumière (L) ou, selon le cas (L1) ou, selon le cas (L2), **en ce que**
(i) un agent de protection contre la lumière (L'') présentant au moins un groupe réactif par rapport aux groupes isocyanate (LG) ou un agent de protection contre la lumière (L1'') à base d'une amine stériquement encombrée présentant au moins un groupe réactif par rapport aux groupes isocyanate (LG) ou un agent de protection contre la lumière (L2'') à base d'un absorbant des UV présentant au moins un groupe réactif par rapport aux groupes isocyanate (LG) ou un mélange d'un agent de protection contre la lumière (L1'') présentant au moins un groupe réactif par rapport aux groupes isocyanate (LG) et d'un agent de protection contre la lumière (L2'') présentant au moins un groupe réactif par rapport aux groupes isocyanate (LG) a été transformé avec un composé (V) saturé contenant des groupes isocyanate et/ou avec un composé (V') insaturé contenant des groupes isocyanate, et
(ii) l'agent de protection contre la lumière contenant des groupes isocyanate (L') ou, selon le cas (L1') ou, selon le cas (L2') obtenu dans l'étape (i) a été transformé avec un ester hydroxyalkylique de l'acide acrylique ou avec un ester hydroxyalkylique de l'acide méthacrylique ou avec un mélange d'un ester hydroxyalkylique de l'acide acrylique et d'un ester hydroxyalkylique de l'acide méthacrylique.

6. Procédé selon la revendication 5, **caractérisé en ce que** le composé (V) contenant des groupes isocyanate contient en moyenne, par molécule, au moins 2 groupes isocyanate et/ou le composé (V) contenant des groupes isocyanate est choisi dans le groupe des diisocyanates aliphatiques et/ou cycloaliphatiques et leurs allophanates, biurets, uretdiones et isocyanurates.

7. Procédé selon la revendication 5 ou 6, **caractérisé en ce que** le composé (V') contenant des groupes isocyanate (V') contient en moyenne, par molécule, au moins 1 double liaison éthyléniquement insaturée et/ou le composé (V') contenant des groupes isocyanate est choisi dans le groupe des uréthane-acrylates et/ou des uréthane-méthacrylates.

8. Procédé selon l'une quelconque des revendications 5 à 7, **caractérisé en ce que** l'agent de protection contre la lumière (L') ou, selon le cas (L1') ou, selon le cas (L2') obtenu dans l'étape (i) est transformé dans l'étape (ii) avec de l'acrylate d'hydroxyéthyle, du méthacrylate d'hydroxyéthyle, du diacrylate de triméthylolpropane, du diméthacrylate de triméthylolpropane, du diacrylate de pentaérythritol, du diméthacrylate de pentaérythritol, du triacrylate de pentaérythritol, du triméthacrylate de pentaérythritol ou leurs mélanges
et/ou
l'agent de protection contre la lumière (L1'') est la 2,4-bis[N-butyl-N-(1-cyclohexyloxy-2,2,6,6-tétraméthylpipéridin-4-yl)amino]-6-(2-hydroxyéthylamine)-1,3,5-triazine et/ou l'agent de protection contre la lumière (L2'') est un mélange de 2-[4-[(2-hydroxy)-3-dodécyloxypropyl]oxy]-2-hydroxyphényl]-4,6-bis-(2,4)-diméthylphényl-1,3,5-triazine et de 2-[4-[(2-hydroxy)-3-tridécyloxy-propyl]oxy]-2-hydroxyphényl]-4,6-bis-(2,4)-diméthylphényl-1,3,5-triazine.

9. Procédé selon l'une quelconque des revendications 1 à 8, **caractérisé en ce que** l'agent de revêtement contient 2,5 à 60,0% en poids de l'agent de protection contre la lumière (L) ou l'agent de revêtement contient 2,5 à 60,0% en poids de l'agent de protection contre la lumière (L1) et/ou 2,5 à 60,0 % en poids de l'agent de protection contre la lumière (L2), toutes les indications de % en poids se rapportant à chaque fois au poids du liant (A) plus le poids des nanoparticules (B) plus le poids du diluant réactif (C) utilisé.

10. Procédé selon l'une quelconque des revendications 1 à 9, **caractérisé en ce que** l'agent de revêtement contient, à chaque fois par rapport au poids du constituant (A) utilisé plus le poids des nanoparticules (B) plus le poids du diluant réactif (C) utilisé :
(A) 0 à 95 % en poids d'au moins un liant (A) durcissant sous l'effet de rayons,
(B) 5 à 60% en poids de nanoparticules (B) et
(C) 0 à 95% en poids d'au moins un diluant réactif inerte par rapport au polycarbonate,
la somme du poids du constituant (A), des nanoparticules (B) et du poids du diluant réactif (C) valant à chaque fois 100%.

11. Agent de revêtement contenant au moins un liant (A) durcissant sous l'effet d'un rayonnement et/ou des diluants (C), des nanoparticules (B), le cas échéant un solvant et au moins un agent de protection contre la lumière (L), **caractérisé en ce que** l'agent de revêtement contient au moins un agent de protection contre la lumière (L), qui contient en moyenne, par molécule, au moins un groupe éthyléniquement insaturé lié via un groupe uréthane.

12. Agent de revêtement selon la revendication 11, **caractérisé en ce que** l'agent de revêtement contient, comme agent de protection contre la lumière (L), un mélange d'un agent de protection contre la lumière (L1) à base d'une amine stériquement encombrée et d'un agent de protection contre la lumière (L2) à base d'un absorbant des UV, où soit
(i) l'agent de protection contre la lumière (L1), soit
(ii) l'agent de protection contre la lumière (L2), soit
(iii) l'agent de protection contre la lumière (L1) et l'agent de protection contre la lumière (L2)
contien(nen)t en moyenne, par molécule, au moins un groupe éthyléniquement insaturé lié via des groupes uréthane, de préférence au moins un groupe acrylate ou un groupe méthacrylate ou tant des groupes acrylate que des groupes méthacrylate, lié(s) via des groupes uréthane.

13. Agent de revêtement selon la revendication 12, **caractérisé en ce que** les groupes acrylate ou les groupes méthacrylate ou les groupes acrylate et les groupes méthacrylate ont été introduits dans l'agent de protection contre la lumière, **en ce que**
(i) un agent de protection contre la lumière (L'') présentant au moins un groupe réactif par rapport aux groupes isocyanate (LG) ou un agent de protection contre la lumière (L1'') présentant au moins un groupe réactif par rapport aux groupes isocyanate (LG) ou un agent de protection contre la lumière (L2'') présentant au moins un groupe réactif par rapport aux groupes isocyanate (LG) ou un mélange d'un agent de protection contre la lumière (L1'') présentant au moins un groupe réactif par rapport aux groupes isocyanate (LG) et d'un agent de protection contre la lumière (L2'') présentant au moins un groupe réactif par rapport aux groupes isocyanate (LG) a été transformé avec un composé (V) saturé contenant des groupes isocyanate et/ou avec un composé (V') insaturé contenant des groupes isocyanate, et
(ii) l'agent de protection contre la lumière contenant des groupes isocyanate (L') ou, selon le cas (L1') ou, selon le cas (L2') obtenu dans l'étape (i) a été transformé avec un ester hydroxyalkylique de l'acide acrylique ou avec un ester hydroxyalkylique de l'acide méthacrylique ou avec un mélange d'un ester hydroxyalkylique de l'acide acrylique et d'un ester hydroxyalkylique de l'acide méthacrylique.

14. Substrat en polycarbonate revêtu, pouvant être obtenu par un procédé selon l'une ou plusieurs des revendications 1 à 10.

15. Substrat en polycarbonate revêtu selon la revendication 14, où il s'agit de plaques, de fenêtres, de verres de lunettes, de lentilles optiques, de pièces de véhicules automobiles, de pièces de motocyclettes, de bus, de poids lourds ou de voitures particulières ou de véhicules utilitaires et/ou de pièces pour avions, de réflecteurs, de réflecteurs de rue, de recouvrements, de pièces de parois de protection sonore, de disques compacts, de disques numériques polyvalents ou de disques numériques vidéo, de pièces de projecteurs et/ou de vitres pour véhicules.
